# EUROPÄISCHE PATENTSCHRIFT

(11) **EP 3 814 636 B1**
(45) Veröffentlichungstag und Bekanntmachung des Hinweises auf die Patenterteilung: **04.09.2024**
(21) Anmeldenummer: 19765791.9
(22) Anmeldetag: 26.06.2019
(51) Int. Cl.: F04B 43/02, F04B 43/04, F04B 45/04, F04B 45/047, F04B 53/10, F16K 99/00

(54) **VERBESSERTE MIKROPUMPE**
IMPROVED MICROPUMP
MICROPOMPE AMÉLIORÉE

(30) Priorität: 26.06.2018 DE 102018115328
(43) Veröffentlichungstag der Anmeldung: 05.05.2021
(73) Patentinhaber: MST Innovation GmbH, 45527 Hattingen (DE)
(72) Erfinder: BARTELS, Frank, 45527 Hattingen (DE); KREMER, Monika, 44229 Dortmund (DE); SIEMENROTH, Florian, 44143 Dortmund (DE); BLASE, Anja, 44265 Dortmund (DE)
(74) Vertreter: Tahhan, Nader Isam Mark
(86) Internationale Anmeldenummer: PCT/IB2019/055396
(87) Internationale Veröffentlichungsnummer: WO 2020/003154

(56) Entgegenhaltungen:
- WO-A1-00/39463
- WO-A1-2007/086296
- JP-A- H0 727 053

## Beschreibung

### Einleitung

Die Erfindung betrifft das Gebiet der Mikropumpen. Insbesondere betrifft die Erfindung eine Mikropumpe zum Fördern von Gasen und Flüssigkeiten, und ein zugeordnetes Verfahren zum Fördern von Gasen und Flüssigkeiten mit einer Mikropumpe.

### Stand der Technik und Nachteile

Mikropumpen sind aus dem Stand der Technik wohlbekannt. Einer Definition zufolge dienen sie dem Fördern von Fluiden (Flüssigkeiten und Gasen) geringer Volumina. Diese liegen typischerweise im Bereich von Mikro- bis Millilitern pro Minute.

Neben der geförderten Fluidmenge je Zeiteinheit kann jedoch auch die Größe der Pumpe, insbesondere ihres Pumpgehäuses, entscheidend bei der Frage nach dem Vorliegen einer Mikropumpe sein. Insofern bezeichnet der Begriff "Mikropumpe" auch ein besonders kleines Gehäuse, welches Kantenlängen im Bereich einiger Millimeter bis hin zu wenigen Zentimetern aufweist. Häufig werden Komponenten wie Netzversorgung und Steuerung separat von besagtem Gehäuse untergebracht, weswegen sich der Begriff "Mikropumpe" im engeren Sinne auf die zum eigentlichen Fördern benötigten Komponenten (Pumpkammer, Ventile, Gehäuse dazu) beschränkt. Insbesondere eine derartige Mikropumpe ist auch Gegenstand der vorliegenden Erfindung.

Eine derartige Pumpe ist aus der Patentschrift EP 2 222 959 B1 bekannt, die auf den vorliegenden Anmelder zurückgeht. Sie umfasst folgende Komponenten: Ein Gehäuseunterteil mit Ein- und Auslass; eine Ventilfolie; ein Mittelteil, welches Öffnungen für eine Verbindung der Ventile mit der Pumpkammer bereitstellt; eine Aktorfolie mit zwei Piezoaktoren; sowie einen Gehäusedeckel.

Wie unmittelbar ersichtlich, umfasst die Pumpe eine nicht unerhebliche Anzahl von Komponenten, die exakt positioniert und teilweise auch untereinander verbunden werden müssen. Insbesondere die Folie, welche die beweglichen Teile der Ventile bereitstellt, muss sehr präzise gefertigt und positioniert sowie mit den angrenzenden Teilen verbunden werden, um die gewünschte Funktion sicherzustellen.

Im Betrieb der Mikropumpe führen die Ventile aufgrund ihrer Trägheit zu einer Begrenzung der Pumpfrequenz. Außerdem sind sie einer ständigen, meist hochfrequenten Belastung ausgesetzt, was hohe Anforderungen an ihre mechanischen Eigenschaften stellt. Ein weiterer Nachteil besteht in der auf den Antrieb der Pumpe zurückgehenden Geräuschemission. Bei Frequenzen oberhalb von ca. 300 Hz sind diese auch bei kleinen Abmessungen deutlich hörbar, und bei Frequenzen oberhalb von ca. 1000 Hz steigt die Geräuschemission auf ein in vielen Anwendungsszenarien nicht tolerierbares Maß. Ein Betrieb oberhalb der Hörschwelle von ca. 20 KHz ist wegen der Trägheit der Ventile nicht möglich.

Desweiteren sind Mikropumpen bekannt, welche auf mechanische Ventile verzichten. Sie werden stattdessen in einem engen Frequenzbereich, vorzugsweise der Resonanzfrequenz 1. oder höherer Ordnung betrieben. Sie sind so ausgelegt, dass bei der Betriebsfrequenz fluiddynamische Effekte zum Tragen kommen, die zu der Ausbildung einer Vorzugsrichtung beim Fördern des Fluids führen. So sind aus der Druckschrift DE 11 2013 002 723 T5, der Druckschrift US 2011/0076170 A1 sowie der Druckschrift US 2016/0377072 A1 Mikropumpen bekannt, welche unter hohen, vorzugsweise im nichthörbaren Bereich liegenden Frequenzen betrieben werden. Der einzige, in Form einer Piezoscheibe vorliegende Aktuator ist auf einer Membran befestigt, welche Durchtrittsöffnungen für das zu fördernde Fluid bereitstellt. Beiderseits der Membran sind mit Fluid gefüllte Kammern vorhanden. Die Strömungsverhältnisse beim Betrieb der Pumpe führen zu einem je nach Schwingungsrichtung der Membran unterschiedlich starkem Fluidwiderstand in der entsprechenden Kammer. Auf diese Weise erfolgt ein Fördern des Fluids in die gewünschte Förderrichtung.

Eine weitere Mikropumpe ist bekannt aus JPH0727053A.Diese Pumpe besitzt zwei Pumpkammern mit einer dazwischenliegenden Durchgangsöffnung und jeweils einer Eingangsöffnung die im unausgelenkten Zustand geschlossen ist. Die Aktuatoren können zeitversetzt angesteuert werden, wodurch Flüssigkeit gefördert werden kann.

Nachteilig an derartigen Anordnungen ist vor allem die Tatsache, dass ihre Betriebsfrequenz in einem relativ engen Bereich liegt, da sich andernfalls keine zufriedenstellende Vorzugsrichtung beim Fördern ausbildet. Damit einhergehend ist auch die Förderrate im Wesentlichen festgelegt. Eine Änderung derselben ist kaum möglich, da bei einer Verringerung der Schwingfrequenz und/oder der Betriebsspannung die fluiddynamische Ventilfunktion nicht mehr realisiert werden kann.

Ein Nachteil dieser wie auch anderer, aus dem Stand der Technik bekannter Mikropumpen ist auch die mangelhafte Dosier- oder Fördergenauigkeit. In bestimmten Fällen, insbesondere im Bereich der Diagnostik und Therapie, ist es wichtig, auch sehr geringe Mengen an Fluid exakt zu dosieren. Der mit der Pumpmembran verbundene Aktuator schwingt im Betrieb zwischen zwei Endauslenkungen. Dabei verändert sich das Volumen der an den Aktuator angrenzenden Pumpkammer von einem Minimum zu einem Maximum, und zurück. Die Differenz zwischen den beiden Endauslenkungen bestimmt das maximal je Hub förderbare Fluidvolumen. Demnach kommt der Lage besagter Endauslenkungen, sowie deren Reproduzierbarkeit in aufeinanderfolgenden Hüben eine entscheidenden Bedeutung hinsichtlich der Dosiergenauigkeit zu. Je genauer es gelingt, die beiden Endauslenkungen konstant zu halten, desto ähnlicher wird auch das Volumen aufeinander folgender Hübe sein.

Tatsächlich ist es schwierig, besagte Endauslenkungen konstant zu halten. Leichte Spannungsschwankungen können zu unterschiedlichen Hüben führen. Temperaturänderungen können in unterschiedlichen Steifigkeiten der beweglichen Teile resultieren. Auch kaum vermeidbare Fertigungstoleranzen insbesondere der Aktuatoren führen bei Mikropumpen innerhalb einer Serie zu unterschiedlichen Ergebnissen im Hinblick auf das je Hub erzielbare Fördervolumen.

### Aufgabe der Erfindung und Lösung

Der Erfindung liegt demnach die Aufgabe zugrunde, eine Vorrichtung und ein Verfahren bereitzustellen, welche bzw. welches die Nachteile des Standes der Technik vermeidet.

Der Erfindung liegt demnach die Aufgabe zugrunde, eine verbesserte Mikropumpe und ein verbessertes Verfahren zum Betrieb einer Mikropumpe bereitzustellen, welche bzw. welches die Nachteile des Standes der Technik vermeidet.

Demnach soll die Anzahl der Komponenten gering gehalten werden. Die einzelnen Komponenten sollen auf einfache Weise montierbar sein. Der Pumpbetrieb soll über einen großen Förderratenbereich möglich sein. Die Belastung der Ventile soll reduziert werden.

Das je Hub erzielbare Fördervolumen soll unabhängig von den Fertigungstoleranzen insbesondere der Aktuatoren werden.

Die Aufgabe wird durch eine Vorrichtung nach Anspruch 1 sowie Anspruch 9 und einem Verfahren nach Anspruch 11 gelöst. Vorteilhafte Ausführungsformen sind den jeweils abhängigen Unteransprüchen, der nachfolgenden Beschreibung sowie den Figuren zu entnehmen.

### Beschreibung

Zunächst erfolgt die Beschreibung einer erfindungsgemäßen Mikropumpe. Daran schließt sich die Beschreibung des erfindungsgemäßen Verfahrens zum Betrieb derselben an.

Die Erfindung betrifft eine Mikropumpe mit geringer Gehäusegröße, wie sie weiter oben beschrieben wurde. Sie umfasst eine Pumpkammer, welche sowohl mittels einer Durchgangsöffnung als auch eines Zugangs fluidisch befüllbar oder entleerbar ist. Die Pumpkammer kann, entlang ihrer Längsachse gesehen, einen rechteckigen, vorzugsweise jedoch einen runden Querschnitt aufweisen.

Die Pumpkammer ist mit einem scheibenförmigen Aktuator abgedeckt, so dass das Volumen der Pumpkammer mittels Auslenkens des Aktuators änderbar ist. Bevorzugt ist der Aktuator ein Piezoaktuator, der ggf. auf einer Trägermembran befestigt sein kann; diese wird vorliegend als dem Aktuator zugehörig definiert. Eine Auslenkung eines scheibenförmigen Aktuators führt zu einem Wölben desselben. In einer unausgelenkten Ruheposition ist ein solcher Aktuator im Wesentlichen flach. Es ist klar, dass der Aktuator vorzugsweise auch in die entgegengesetzte Richtung auslenkbar ist, was zu einer größeren Differenz zwischen den beiden erzielbaren Grenzvolumina der Pumpkammer führt. Der Aktuator kann auch auf einem anderen Prinzip basierend aufgebaut sein, beispielsweise elektromechanisch. In diesem Fall ist die das Volumen bestimmende Komponente die an die Pumpkammer angrenzende Wandung, die beispielsweise auch eine Membran sein kann.

Die Durchgangsöffnung ist in einer dem Aktuator gegenüberliegenden Seite der Pumpkammer angeordnet, so dass ein Eingang zur Durchgangsöffnung, je nach konstruktiver Variante, mittels des ausgelenkten oder unausgelenkten Aktuators verschließbar ist, so dass ein Ventil gebildet ist. Das Ventil kann demnach aktiv geöffnet und geschlossen werden. Ist die Durchgangsöffnung im ausgelenkten Zustand des Aktuators verschlossen, handelt es sich um ein im Grundzustand offenes Ventil ("normally-open-Variante"). Ist die Durchgangsöffnung im unausgelenkten Zustand des Aktuators verschlossen, handelt es sich um ein im Grundzustand geschlossenes Ventil ("normally-closed-Variante"). Tatsächlich ist das Vorhandensein des Ventils lediglich ein Resultat der erfindungsgemäßen Anordnung des Eingangs der Durchgangsöffnung und des ausgelenkten bzw. unausgelenkten Aktuators; die Erfindung stellt demnach eine Ventilfunktion bereit, ohne hierfür typischerweise benötigte, zusätzliche Komponenten (separater Aktuator, Ventilklappen, ggf. spezifische Strömungsdynamik eines passiven Ventils) zu benötigen.

Außerdem weist der Zugang einen im Vergleich zur Durchgangsöffnung grö-ßeren oder ähnlichen Strömungswiderstand auf. Vorzugsweise beträgt der Unterschied Faktor 1,0 bis 10. Dies führt dazu, dass unter Druck stehendes Fluid die Pumpkammer vorzugsweise durch die Durchgangsöffnung verlässt bzw. in sie einströmt, sofern der Eingang geöffnet (der Aktuator nicht vollständig ausgelenkt) ist. Somit ist ein weiteres, jedoch passives und ohne bewegte Teile auskommendes Ventil bereitgestellt, welches - wenn Zugang und Eingang geöffnet sind - dem Fluidstrom eine Vorzugsrichtung aufprägt. Es ist klar, dass bei geschlossenem Eingang keine solche Vorzugsrichtung zum Tragen kommt.

Die erfindungsgemäße Mikropumpe weist ferner eine zweite Pumpkammer mit Aktuator und Zugang auf, wobei die Durchgangsöffnung dieser weiteren Pumpkammer mit derjenigen der ersten Pumpkammer verbunden ist.

Durch geeignetes Ansteuern der Aktuatoren ist es möglich, eine Peristaltikpumpe bereitzustellen, welche mit zwei Kammern ausgestattet ist. Die Funktionsweise wird weiter unten detailliert beschrieben.

Die Erfindung vermeidet somit die aus dem Stand der Technik bekannten Nachteile.

Eine erfindungsgemäß aufgebaute Mikropumpe weist eine sehr geringe Anzahl von Einzelteilen auf. Aufgrund der Symmetrie wird die Anzahl unterschiedlicher Teile reduziert. Die Montage ist einfach, da z.B. das präzise Einsetzen einer Ventilfolie entfällt. Ebenso ist die Anzahl der Fügestellen stark reduziert. Die Pumpfrequenz wird nicht mehr durch die Trägheit separater Ventile begrenzt. Auch eine Geräuschentwicklung durch besagte Ventile entfällt, ebenso wie die Gefahr eines Versagens derselben. Aufgrund der Verwendung von zwei separat ansteuerbaren Pumpkammern ist eine Entkopplung der Eigenfrequenz von der möglichen Pumpfrequenz gegeben; die Mikropumpe kann in einem weiten Frequenzbereich betrieben werden. Somit ist auch die Förderrate in einem weiten Bereich einstellbar.

Nachfolgend werden verschiedene Ausführungsformen der Erfindung näher beschrieben.

Nach einer Ausführungsform der erfindungsgemäßen Mikropumpe ist diese dadurch gekennzeichnet, dass sie eine zweite derartige Pumpkammer mit allen zuvor beschriebenen Merkmalen aufweist.

Nach einer Ausführungsform gilt:
- Ist ein Eingang zur Durchgangsöffnung im ausgelenkten Zustand des Aktuators verschlossen, handelt es sich um ein im Grundzustand offenes Ventil ("normally-open-Variante"). Dabei ist der Aktuator in einer Ruhelage von der gegenüberliegenden Seite der jeweiligen Pumpkammer beabstandet.
- Ist ein Eingang zur Durchgangsöffnung im unausgelenkten Zustand des Aktuators verschlossen, handelt es sich um ein im Grundzustand geschlossenes Ventil ("normally-closed-Variante"). Dabei liegt der Aktuator in einer Ruhelage an der gegenüberliegenden Seite der jeweiligen Pumpkammer an.

Die Mikropumpe nach dieser Ausführungsform ist dadurch gekennzeichnet, dass dem Aktuator ein Anschlag zugeordnet ist, welcher den Hub des Aktuators in mindestens eine seiner (Haupt-)Schwingrichtungen mechanisch begrenzt. Das bedeutet, dass der Aktuator mindestens in eine seiner beiden wesentlichen Schwingrichtungen, also derjenigen Schwingrichtung(en), welche zum Fördern benötigt wird bzw. werden, in seiner Bewegungsfreiheit mechanisch limitiert ist. Anders ausgedrückt, mindestens eine der beiden oben genannten Endauslenkungen ist durch die Lage des Anschlags definiert, und wird nicht durch die von Aktuator zu Aktuator leicht unterschiedliche, sich bei ansonsten gleichen Umgebungsbedingungen (Temperatur, Spannung, Fertigungstoleranzen) ergebende "ungehinderte" Endposition des frei schwingenden Aktuators beeinflusst. Die Bereitstellung eines geeigneten Anschlags, welcher zu einer definierten Position des Endanschlags des Aktuators führt, ist fertigungstechnisch im Vergleich zu einem Aktuator mit gleichbleibender Qualität einfacher zu erreichen.

Vor allem jedoch ist die Position der Endauslenkung eines Aktuators auf einfache und kostengünstige Weise exakt definierbar. Somit wird das Fördervolumen je Hub unabhängig von der durch die von Aktuator zu Aktuator leicht unterschiedlichen, sich bei ansonsten gleichen Umgebungsbedingungen (Temperatur, Spannung, Fertigungstoleranzen) ergebenden Endposition eines frei schwingenden Aktuators. Ebenso weisen Mikropumpen innerhalb einer Serie eine signifikant geringere Streuung hinsichtlich ihrer Fördervolumina je Hub, und somit eine gleichbleibendere Qualität auf.

Nach einer weiteren Ausführungsform sind die beiden Aktuatoren auf ganz bestimmte Art und Weise ansteuerbar.

Dies betrifft zunächst die Wellenform der Ansteuerung. Als Wellenformen kommen demnach insbesondere eine Rechteckwelle, bevorzugt jedoch eine Sinuswelle und eine Trapezwelle, also eine Welle mit ansteigender, dann konstanter, und anschließend wieder abfallender Höhe, in Betracht. Die bevorzugten Wellenformen weisen unter anderem den Vorteil einer geringeren Geräuschentwicklung beim Betrieb auf.

Ferner betrifft dies auch die Phasenlage oder den Phasenversatz. Demnach ist zwischen den beiden Wellen ein Phasenversatz ungleich 180° herstellbar. Tatsächlich würde die vorliegende Mikropumpe, wenn ihre beiden Aktuatoren gerade abwechselnd, also mit einem Phasenversatz von 180°, angesteuert würden, nicht funktionieren. Versuche haben ergeben, dass ein Phasenversatz von 90° im Allgemeinen zu guten Ergebnissen führt. Überraschenderweise wurde jedoch auch festgestellt, dass je nach konkreter Ausgestaltung der Mikropumpe ein hiervon nach unten abweichender Wert, beispielsweise 70°, 75°, 80°, 85°, oder ein nach oben abweichender Wert, beispielsweise 95°, 100°, 105°, 110°, zu noch besseren Arbeitsergebnissen (Pumpleistungen) führen kann. Dies ist insbesondere dann der Fall, wenn die beiden Pumpkammern nicht vollständig identisch, sondern leicht "asymmetrisch" aufgebaut sind (beispielsweise unterschiedliche Volumina, Aktuatoren, ...).

Die Frequenz der Ansteuerung der Aktuatoren liegt vorzugsweise im Bereich 1 Hz bis 100 kHz, und vorzugsweise im Bereich von 50 Hz bis 25 kHz.

Nach einer bevorzugten Ausführungsform umfasst die Mikropumpe eine Steuerung, oder eine solche ist der Mikropumpe zugeordnet. Die Steuerung erzeugt die o.g. Wechselspannungen, welche den bestimmten Wellenformen entsprechen, und die an die beiden Aktuatoren zwecks deren Ansteuerung weiterleitbar sind. Sie weist außerdem die Möglichkeit der Einstellbarkeit des Phasenversatzes, zumindest in dem vorstehend angegebenen Bereich, auf. Besonders bevorzugt ist die Phasenlage auch umkehrbar (z.B. -90° statt +90°).

Nach einer Ausführungsform sind die beiden Pumpkammern gegenüberliegend positioniert und mittels der gemeinsamen Durchgangsöffnung fluidisch miteinander verbunden. Auf diese Weise ist eine sehr kompakte Mikropumpe bereitgestellt. Zudem ist die verbindende Durchgangsöffnung dann in einer minimalen Länge bereitstellbar, was sowohl für ein geringeres Totvolumen, als auch bessere Strömungseigenschaften sorgt.

Nach einer anderen Ausführungsform sind die beiden Pumpkammern nebeneinander angeordnet. Auf diese Weise ist eine besonders flache Bauform realisierbar. Ein weiterer Vorteil dieser Ausführungsform ist die Möglichkeit, die Montage vollständig von einer Seite durchführen zu können. Nach einer weiteren Ausführungsform ist die Durchgangsöffnung im Zentrum der dem Aktuator gegenüberliegenden Seite der jeweiligen Pumpkammer angeordnet. Insbesondere dann, wenn ein scheibenförmiger, runder Aktuator verwendet wird, tritt dessen maximale Auslenkung im Zentrum der Scheibe auf. Somit ist es sinnvoll, auch die Durchgangsöffnung bzw. den Eingang zu derselben in das Zentrum derjenigen Seite zu legen, die dem Aktuator gegenüberliegt. Es ist aber auch möglich, den Eingang an einer anderen Stelle anzuordnen; wichtig ist lediglich, dass der Aktuator im, je nach Variante, ausgelenkten oder unausgelenkten Zustand besagten Eingang verschließt bzw. verschließen kann.

Es sei angemerkt, das ein Verschließen auch dann als ausreichend angesehen wird, wenn ein gewisser Restspalt vorhanden ist, durch den - im Verhältnis zum Zugang, auf den weiter unten noch eingegangen wird - nur geringe Mengen an Fluid fließen können. Es ist klar, dass durch eine geeignete Materialwahl oder Beschichtung von Aktuator(innenseite) und/oder Eingang der Durchgangsöffnung die Dichtwirkung erhöht werden kann. Zudem kann durch die Wahl eines weicheren Materials die Geräuschentwicklung, die eventuell beim Verschließen des Eingangs durch den Aktuator entsteht, weiter reduziert werden. Es sei aber hinzugefügt, dass alleine durch die erfindungsgemäße Konstruktion in Verbindung mit einem geeignet "weichen" Auslenken des Aktuators, insbesondere nahe seiner maximalen Auslenkung, die Geräuschentwicklung weitgehend unterbunden werden kann. Hierzu ist die Auslenkungsgeschwindigkeit nahe der maximalen Auslenkung entsprechend herunterzufahren.

Nach einer Ausführungsform ist der unausgelenkte Aktuator von der ihm gegenüberliegenden Seite der Pumpkammer beabstandet, so dass sich eine "echte" Pumpkammer mit einem Volumen größer Null ergibt. Das bedeutet, dass der Aktuator in der Ruheposition eine Begrenzung der Pumpkammer bildet, und eine von ihr verschiedene zweite Begrenzung vorhanden ist, und zwischen beiden Begrenzungen zumindest abschnittsweise ein Abstand vorhanden ist, so dass sich zwischen den beiden Begrenzungen ein positives Volumen befindet, welches nicht gleich oder nahe Null ist, sondern einen signifikanten Anteil des bei einem einzelnen Hub bewegten Volumens bildet.

Beispielsweise kann der Aktuator die Grundfläche eines kalotten-, halbkugel- oder zylinderförmigen Volumens bilden (erste Begrenzung), und die restliche Fläche der Kalotte, der Halbkugel oder des Zylinders stellt die zweite Begrenzung bereit. Die Pumpkammer hat dann das Volumen des entsprechenden Innenraums.

Es ist klar, dass diese Ausführungsform sowohl bei einem Aktuator mit in Ruhelage ebener Form, als auch mit einer in Ruhelage nicht-ebenen, beispielsweise kalottenartig (kugelsegmentartig) gewölbten Form realisierbar ist.

Nach einer Ausführungsform mit einem Anschlag gemäß obiger Definition ist der unausgelenkte Aktuator von der ihm gegenüberliegenden Seite der Pumpkammer beabstandet, so dass sich eine "echte" Pumpkammer mit einem Volumen größer Null ergibt, wobei der Anschlag durch die Seite gebildet ist, gegen welche der Aktuator bei minimalem Hub mittels Ansteuerns mechanisch anlegbar ist, d.h. bei minimalem Hub in Richtung der Seite an dieser anliegt, so dass das Volumen der Pumpkammer definiert minimierbar ist. Der Anschlag kann daher auch als "Innenanschlag" bezeichnet werden.

Das bedeutet wiederum, dass der Aktuator in der Ruheposition eine Begrenzung der Pumpkammer bildet, und eine von ihr verschiedene zweite Begrenzung vorhanden ist, und zwischen beiden Begrenzungen zumindest abschnittsweise ein Abstand vorhanden ist, so dass sich zwischen den beiden Begrenzungen ein positives Volumen befindet, welches nicht gleich oder nahe Null ist, sondern einen signifikanten Anteil des bei einem einzelnen Hub bewegten Volumens bildet.

Ferner bedeutet dies, dass als mechanischer Anschlag die dem Aktuator zugewandte Seite des Innenraums der Pumpkammer dient. Der Aktuator ist so weit ansteuerbar (d.h. beispielsweise mit einer solch hohen Spannung betreibbar), dass er sich dieser Seite bis zur Herstellung eines körperlichen Kontaktes annähert, d.h., der Hub wird minimal. Vorzugsweise wäre der Hub ohne das Hindernis des Anschlags sogar noch weiter auslenkbar, so dass sichergestellt werden kann, dass sich der Aktuator im ausgelenkten Zustand tatsächlich immer am Anschlag befindet, vorzugsweise einen gewissen Druck auf diesen ausübt, so dass somit immer der Anschlag die Endposition des Aktuators vorgibt, und diese somit unabhängig von Fertigungstoleranzen etc. des Aktuators macht.

Nach einer anderen Ausführungsform liegt der unausgelenkte Aktuator an der ihm gegenüberliegenden Seite der Pumpkammer an, so dass sich eine "flache" Pumpkammer mit einem Volumen von, oder von nahezu, Null ergibt. Im Gegensatz zur vorbeschriebenen Ausführungsform liegen erste und zweite Begrenzung aneinander an, oder sie weisen nur einen vernachlässigbar kleinen Abstand voneinander auf. Es ist klar, dass konstruktiv ein geringer Spalt zwischen ihnen kaum vermeidbar ist; eine Pumpkammer nach dieser Ausführungsform weist jedoch in unausgelenkter Lage des Aktuators zwar ein Rest- oder Totvolumen auf, welches, gemessen am Anteil des bei einem einzelnen Hub tatsächlich bewegten Volumens, vernachlässigbar klein ist.

Es ist wiederum klar, dass diese Ausführungsform sowohl bei einem Aktuator mit in Ruhelage ebener Form, als auch mit einer in Ruhelage nicht-ebenen, z.B. kalottenartig (kugelsegmentartig) gewölbten Form realisierbar ist. Entscheidend ist, dass die Form der dem Aktuator gegenüberliegenden Seite der Pumpkammer zumindest im Wesentlichen entsprechend der Form des unausgelenkten Aktuators ausgestaltet ist.

Nach einer anderen Ausführungsform mit einem Anschlag gemäß obiger Definition liegt der unausgelenkte Aktuator ebenfalls an der ihm gegenüberliegenden Seite der Pumpkammer an, so dass sich im unausgelenkten Zustand eine "flache" Pumpkammer mit einem Volumen von, oder von nahezu, Null ergibt, wobei der Anschlag, gegen welchen der Aktuator mittels Ansteuerns mechanisch anlegbar ist, sich auf derjenigen Seite des Aktuators befindet, welche der Pumpkammer abgewandt ist, so dass der Aktuator bei maximalem Hub in Richtung des Anschlags an diesem anliegt, und so dass das Volumen der Pumpkammer definiert maximierbar ist. Der Anschlag kann daher auch als "Außenanschlag" bezeichnet werden.

Im Gegensatz zur vorbeschriebenen Ausführungsform liegen erste und zweite Begrenzung aneinander an, oder sie weisen nur einen vernachlässigbar kleinen Abstand voneinander auf. Es ist klar, dass konstruktiv ein geringer Spalt zwischen ihnen kaum vermeidbar ist; eine Pumpkammer nach dieser Ausführungsform weist jedoch in unausgelenkter Lage des Aktuators zwar ein Rest- oder Totvolumen auf, welches, gemessen am Anteil des bei einem einzelnen Hub tatsächlich bewegten Volumens, vernachlässigbar klein ist.

Im Gegensatz zur vorher beschriebenen Ausführungsform ist der Anschlag nun auf der "Außenseite" des Aktuators angeordnet. Er kann beispielsweise durch einen Käfig, ein entsprechend enges Außengehäuse, oder eine Anschlagsschraube bereitgestellt sein. Er sollte so steif ausgeführt sein, dass er sich bei mechanischer Kontaktierung mit der Außenseite des Aktuators nicht, oder nicht signifikant, verformt. Der Kontakt wird hergestellt, wenn der Aktuator seinen maximalen Abstand von der ihm gegenüberliegenden Seite der Pumpkammer einnimmt, also die Pumpkammer maximales Volumen aufweist. Die Vorteile ergeben sich in analoger Weise zur vorhergehenden Ausführungsform mit Innenanschlag.

Es ist wiederum klar, dass diese Ausführungsform sowohl bei einem Aktuator mit in Ruhelage ebener Form, als auch mit einer in Ruhelage nicht-ebenen, z.B. kalottenartig (kugelsegmentartig) gewölbten Form realisierbar ist. Entscheidend ist, dass die Form der dem Aktuator gegenüberliegenden Seite der Pumpkammer zumindest im Wesentlichen entsprechend der Form des unausgelenkten Aktuators ausgestaltet ist.

Nach einer Ausführungsform der Mikropumpe umfasst dieselbe sowohl eine Pumpkammer gemäß obiger Definition einer "echten" Pumpkammer mit Innenanschlag, als auch einen Außenanschlag gemäß obiger Definition einer "flachen" Pumpkammer. Anders ausgedrückt, der Aktuator wird bei minimalem Hub bzw. in seiner minimalen Auslenkung durch die ihm gegenüberliegende Innenwand der Pumpkammer an einer (weiteren) freien Bewegung gehindert, und bei maximalem Hub bzw. in seiner maximalen Auslenkung wird er durch den "außenliegenden" mechanischen Anschlag an einer (weiteren) freien Bewegung gehindert. Der Vorteil dieser Ausführungsform besteht in der exakten Definierbarkeit beider Endpositionen des Aktuators, so dass der gesamte (ggf. beidseitige) Hub, und somit das dabei förderbare Volumen, exakt definiert ist. Dies ist insbesondere dann vorteilhaft, wenn der Aktuator zwischen zwei nicht-ebenen Geometrieben hin- und herschwingt, d.h., keine der beiden Endpositionen entspricht der typischerweise ebenen, spannungsfreien Ruheposition.

Nach einer weiteren Ausführungsform der Mikropumpe umfasst dieselbe nur eine Pumpkammer gemäß Definition einer "echten" Pumpkammer mit Innenanschlag, oder nur eine Pumpkammer gemäß Definition einer "flachen" Pumpkammer mit Außenanschlag, oder nur eine Kombination dieser beiden Definitionen (d.h. eine echte Pumpkammer mit Innen- und Außenanschlag), wobei das nutzbare Volumen dieser (ersten) Pumpkammer kleiner oder gleich dem nutzbaren Volumen der ja ebenfalls vorhandenen zweiten Pumpkammer ist. Anders ausgedrückt, eine erste Pumpkammer ist nach einer der vorstehenden Ausführungsformen ausgestaltet, und die zweite Pumpkammer ist von anderer Bauform, weist also keinen entsprechenden Anschlag auf.

Diese Ausführungsform ist dann vorteilhaft verwendbar, wenn die Mikropumpe in nur eine Förderrichtung fördern soll, nämlich von der Pumpkammer gemäß einer der obigen Definitionen (erste Pumpkammer) zu der zweiten Pumpkammer anderer Bauart. Das definierte Fördervolumen je Hub wird dann durch die einen Anschlag aufweisende Pumpkammer vorstehender Definition exakt vorgegeben. Die Pumpkammer der anderen Bauart kann demnach nicht mehr als das ihr bereitgestellte Fördervolumen weiterfördern, so dass dieses weiterhin exakt definiert bleibt.

Nach einer anderen Ausführungsform der Mikropumpe weist dieselbe zwei Pumpkammern gemäß einer der vorstehenden Definition auf (Pumpkammer mit Innen- und/oder Außenanschlag). Anders ausgedrückt, die beiden Pumpkammern sind weitgehend identisch. Sie können vorzugsweise spiegelsymmetrisch ausgestaltet sein. Der Vorteil dieser Ausführungsform liegt darin, dass die Förderrichtung auf einfache Weise umkehrbar ist; da die Fördervolumina beider Pumpkammern exakt definierbar sind (über die jeweiligen Anschläge), ist es unerheblich, welche vom Fluid zuerst, und welche danach durchlaufen wird.

Nach einer weiteren Ausführungsform weist die dem Aktuator gegenüberliegende, die Durchgangsöffnung aufweisende Seite der Pumpkammer zumindest im Bereich der Durchgangsöffnung die negative Form des ausgelenkten (normally-open-Variante) bzw. des unausgelenkten (normally-closed-Variante) Aktuators auf. Das bedeutet, dass durch eine Anpassung des Eingangs der Durchgangsöffnung an die Wölbung des Aktuators an entsprechender Stelle (z.B. in seinem Zentrum) die Dichtigkeit des Ventils verbessert wird.

Dies schließt auch den umgekehrten Fall ein, wonach der Aktuator zumindest im entsprechenden Kontaktbereich an den Eingang angepasst wird.

Nach einer weiteren Ausführungsform ist auch der Zugang in derjenigen Seite angeordnet, die dem Aktuator gegenüberliegt. Somit kann der Aktuator nicht nur den Eingang, sondern auch den Zugang verschließen und öffnen. Je nach Lage des Zugangs kann dieser zeitgleich, vor, oder auch nach dem Eingang verschließbar sein. Eine frühere Verschließbarkeit ist vorteilhaft, da dann der Fluidverlust durch unerwünschtes Rückströmen verringert wird, der bei einem rein passiven Ventil (Strömungswiderstandsunterschied zwischen Durchgangsöffnung und Zugang) nicht ganz vermeidbar ist.

Nach Nach einer besonders bevorzugten Ausführungsform weist die dem Aktuator gegenüberliegende, die Durchgangsöffnung aufweisende Seite der Pumpkammer vollständig (oder im Wesentlichen vollständig) die negative Form des ausgelenkten Aktuators (normally-open-Variante) bzw. unausgelenkten Aktuators (normall-closed-Variante) auf. Auf diese Weise ist das minimale Volumen, und somit das Totvolumen, der Pumpkammer nahezu auf Null reduzierbar. Zudem wird auch die benötigte Gehäusegröße minimiert.

Im Falle einer "echten" Pumpkammer entspricht die Form der dem Aktuator gegenüberliegenden Seite im Wesentlichen der Form des ausgelenkten Aktuators. Im Falle einer "flachen" Pumpkammer entspricht die Form der dem Aktuator gegenüberliegenden Seite im Wesentlichen der Form des Aktuators in Ruhelage. Typischerweise hat diese Seite im ersten Fall eine konkave Wölbung und ist im zweiten Fall flach; es sind aber auch andere Formen möglich (s.o.).

Nach einer Ausführungsform verläuft der jeweilige Zugang senkrecht zur Durchgangsöffnung. Verläuft die Durchgangsöffnung beispielsweise entlang einer Längsachse der Mikropumpe, verlaufen die Zugänge in etwa quer zu derselben. Dies erlaubt eine besonders platzsparende Anordnung der beiden Zugänge, die vorzugsweise in entgegengesetzter Richtung verlaufen.

Nach einer weiteren Ausführungsform verläuft der jeweilige Zugang zumindest in seinem innenliegenden Endbereich in etwa parallel zur Ebene des Aktuators. Das bedeutet, dass er im Falle einer "oben" mit dem Aktuator abgedeckten Pumpkammer "seitlich" in diese Pumpkammer mündet.

Wie bereits oben angemerkt, betrifft die vorliegende Erfindung eine Mikropumpe mit einem Gehäuse geringer Baugröße. Somit ist die Mikropumpe von Pumpen größerer Bauart klar abzugrenzen; auch weil sich die Anforderungen von derartigen, groß bauenden Pumpen deutlich von denen kleinster Bauart unterscheiden. Konkret ist ein die Aktuatoren umfassendes Gehäuse der Mikropumpe nicht größer als 5 cm x 2 cm x 1 cm, und bevorzugt als 12 mm x 12 mm x 2,5 mm. Das Gehäuse muss dabei nur die zum eigentlichen Fördern wesentlichen Komponenten (Pumpkammern und Aktuatoren) umfassen, nicht jedoch weitere Komponenten wie ein Energiespeicher bzw. eine Energieversorgung oder eine Steuerung.

Nach einer anderen Ausführungsform hat das Gehäuse eine zylindrische Grundform mit einem Durchmesser von nicht mehr als 3 cm, bevorzugt 2 cm, und besonders bevorzugt 1,5 cm, und einer Höhe von nicht mehr als 2 cm, und bevorzugt 1 cm, und besonders bevorzugt 0,75 cm.

Nach einer weiteren Ausführungsform der Mikropumpe weist dieselbe mindestens an einem der Aktuatoren einen Sensor zur Detektion des Anschlagens seiner zur Pumpkammer weisenden Seite auf. Das bedeutet, dass durch Auswertung des von diesem Sensor erzeugten Signals bestimmbar ist, ob bzw. dass besagtes Anschlagen auch stattfindet. Eine Ansteuerung mit Anschlag kann, wie weiter oben erläutert, wünschenswert sein. Mittels des Sensors ist das Anschlagen überprüfbar.

Als Sensor können ein passiver "Kontroll-Piezo", oder beispielsweise ein Dehnungsmesstreifen Verwendung finden.

Die Erfindung betrifft auch ein Ventilsystem zum Steuern eines Fluidflusses, umfassend die Komponenten einer Mikropumpe gemäß vorstehender Definitionen, wobei das Ventilsystem vier Stufen umfasst, welche durch den Zugang und den ersten Aktuator, den ersten Aktuator und die Durchgangsöffnung, die Durchgangsöffnung und den zweiten Aktuator, sowie den zweiten Aktuator und den Zugang gebildet sind.

Anders ausgedrückt, eine Mikropumpe der erfindungsgemäßen Art kann auch dazu Verwendung finden, als vierstufiges Ventilsystem eingesetzt zu werden. Ein solches Ventilsystem weist den Vorteil besonders hoher Sicherheit zur Vermeidung von unerwünschtem Durchfluss von Fluid auf, da es eine große Anzahl von Stufen umfasst. Gleichzeitig kann das Ventilsystem als Mikropumpe eingesetzt werden. Es ist klar, dass diese Ausführungsform vorteilhaft mit "Normally-closed"-Pumpkammern gebildet wird, damit im geschlossenen Zustand des Ventilsystems keine Energie benötigt wird. Jedoch ist auch der umgekehrte Fall möglich.

Die Erfindung betrifft auch ein Verfahren zum Betrieb einer Mikropumpe gemäß vorstehender Beschreibung.

Zunächst befindet sich das System in einem Anfangszustand. Dieser kann im Prinzip ein beliebiger der nachfolgend beschriebenen Zustände sein; er ist demnach willkürlich wählbar, und wird im Folgenden so bestimmt, dass eine besonders verständliche Beschreibung der Verfahrensschritte ermöglicht wird.

Der Ausgangszustand sei demnach der Zustand, in dem beide Aktuatoren derart angesteuert sind, so dass die Volumina der Pumpkammern minimal und die jeweiligen Eingänge zur Durchgangsöffnung sowie die Zugänge verschlossen sind. Bei Piezoaktuatoren sind im Falle der normally-open-Variante beide Aktuatoren in einem angesteuerten, gewölbten Zustand; im Falle der normally-closed Variante sind beide Aktuatoren in einem im Wesentlichen flachen (unangesteuerten) Zustand.

Ein Pumpzyklus umfasst dann folgende Schritte:
1. Vergrößern des Abstandes des ersten Aktuators von der ihm gegenüberliegenden Seite, so dass sich das Volumen der ersten Pumpkammer vergrö-ßert und der erste Zugang sowie der erste Eingang zur Durchgangsöffnung geöffnet werden, so dass Fluid aufgrund des so gebildeten Unterdrucks durch den ersten Zugang in die erste Pumpkammer strömen kann und diese befüllt.
   "Vergrößern des Abstandes" meint dabei, dass die Auslenkung so verändert wird, dass sich das Volumen der Pumpkammer vergrößert. Es ist also klar, dass - je nach Art des Aktuators - ein "Entspannen", aber auch eine Vergrößerung seiner Auslenkung zu einer Vergrößerung des Pumpkammervolumens führen kann; beispielsweise dann, wenn der Aktuator in einer Ruhelage am Eingang anliegt, und durch Aktivieren (z.B. Anlegen einer Spannung) ausgelenkt wird, so dass er sich vom Eingang entfernt, wie es bei der normally-closed-Variante der Fall ist.
2. Gleichzeitiges Verkleinern des Abstandes des ersten Aktuators von der ihm gegenüberliegenden Seite und Vergrößern des Abstandes des zweiten Aktuators von der ihm gegenüberliegenden Seite, so dass auch der zweite Eingang zur Durchgangsöffnung geöffnet ist, und das Volumen der ersten Pumpkammer reduziert, und zugleich das Volumen der zweiten Pumpkammer vergrößert wird, wodurch das Fluid von der ersten Pumpkammer durch die gemeinsame Durchgangsöffnung in die zweite Pumpkammer strömen kann und erstere entleert und letztere befüllt wird.

Auf diese Weise wird das Fluid kontinuierlich von der ersten in die zweite Pumpkammer "verschoben". Während des Verschiebens sind beide Eingänge zum Durchgang geöffnet; nur ganz am Anfang ist lediglich der erste Eingang geöffnet und der zweite (noch) verschlossen, so dass (noch) kein Fluid fließen kann. Ganz am Ende ist der erste Eingang (schon) geschlossen und nur der zweite geöffnet, so dass ebenfalls kein Fluid (mehr) fließen kann.

Vorzugsweise wird der erste Zugang bei Unterdruck (Ansaugphase) möglichst früh geöffnet, und wird beim Verschieben früh geschlossen.

Vorzugsweise bleibt der zweite Zugang beim Verschieben möglichst lange geschlossen, und wird bei Überdruck (Ausgabephase) möglichst früh geöffnet.

3. Verkleinern des Abstandes auch des zweiten Aktuators, so dass das Volumen der zweiten Pumpkammer minimal wird und das Fluid aufgrund des sich bildenden Überdrucks durch den zweiten Zugang ausgegeben wird, und sich die Mikropumpe wieder im Anfangszustand befindet.

Durch Wiederholen der Schritte 1, 2 und 3 wird ein quasi-kontinuierliches Fördern von Fluid ermöglicht. Das Fluid wird in den ersten Zugang hinein, durch beide Pumpkammern hindurch, und durch den zweiten Zugang hinausgefördert.

Erfolgt hingegen keine Wiederholung der Schritte, hat die Mikropumpe die kleinstmögliche Flüssigkeitsmenge dosiert abgegeben. Das mit Hilfe der erfindungsgemäßen Mikropumpe förderbare Volumen liegt, in Abhängigkeit von Betriebsspannung und Hubvolumen, typischerweise im Bereich von 0,01 µl und 50 µl je Hub, und bevorzugt zwischen 0,1 µl bis 2,0 µl je Hub.

Nach einer Ausführungsform für eine Mikropumpe mit Anschlag wird mindestens der erste Aktuator dann, wenn er sich in Richtung des jeweiligen Anschlags bewegt, derart angesteuert, dass er mit dem Anschlag in mechanischen Kontakt kommt, so dass sein Hub auf definierte Weise begrenzt wird. Das bedeutet, mindestens einer der Aktuatoren weist mindestens einen der Anschläge gemäß obiger Definition auf, so dass das durch diesen Aktuator förderbare Volumen mittels des Anschlags definiert, und nicht mehr unmittelbar von der Qualität etc. des Aktuators (s.o.) abhängig ist.

Selbstverständlich kann eine Pumpkammer auch beide beschriebenen Anschläge aufweisen, und es können auch beiden Pumpkammern solcherart ausgestaltet sein, dass eine Mikropumpe mit bis zu vier Anschlägen verwendet wird.

Beide Aktuatoren werden erfindungsgemäß jeweils mit einer Rechteckwelle, einer Sinuswelle, oder einer Trapezwelle angesteuert.

Die beiden Aktuatoren werden dabei vorzugsweise mit einem Phasenversatz von ±90° betrieben. Der Phasenversatz kann jedoch in einem Bereich von ±70° bis ±120° liegen; auf die obenstehenden Ausführungen hierzu wird verwiesen. Ferner ist auch ein schrittweises Abarbeiten der beschriebenen Schritte möglich, wobei nur beim "Verschieben" eine gleichzeitige Bewegung beider Aktuatoren stattfindet.

Durch Erhöhen der Pumpfrequenz wird die Förderleistung gesteigert. Umgekehrt ist die minimale Förderleistung nur durch das Volumen beider Pumpkammern begrenzt, also die Fördermenge, die bei einem einzigen Zyklus durch die Mikropumpe gefördert wird.

Besonders bevorzugt wird die Mikropumpe mit einer Sinus-Wellenform, einer Frequenz von 300 Hz, und einem Phasenversatz von vorzugsweise ±(70° - 110°) oder besonders bevorzugt von ±90° betrieben.

Werden (i) die Schritte in umgekehrter Reihenfolge durchlaufen, oder wird (ii) der Phasenversatz in geeigneter Weise verändert, so wird das Fluid in den zweiten Zugang hinein, durch beide Pumpkammern hindurch, und durch den ersten Zugang hinausgefördert. Hierfür erfolgt eine Anpassung des Phasenversatzes unter Zuhilfenahme einer in geeigneter Weise regelbaren Ansteuerung. Erfolgt beispielsweise bei einem Phasenversatz von +90° eine Förderung in eine erste Förderrichtung, so wird durch Negation dieses Wertes zu -90° eine Umkehr in die entgegengesetzte Förderrichtung erreicht. Somit bietet die erfindungsgemäße Mikropumpe auf überraschend einfache Weise, nämlich aufgrund ihrer Ansteuerbarkeit mittels eines veränderten Phasenversatzes (auch: Phasenverschiebung, Phasendifferenz), die Möglichkeit einer Richtungsumkehr der Förderrichtung. Es ist klar, dass eine Richtungsumkehr der erfindungsgemäßen Art nur unter Verwendung einer Mikropumpe mit zwei praktisch identischen Pumpkammern möglich ist. Auf die obenstehenden Erläuterungen hierzu wird verwiesen.

Nach einer Ausführungsform des erfindungsgemäßen Verfahrens entspricht die Förderleistung je Zeiteinheit dem Produkt von Volumen der Pumpkammern und Anzahl der Zyklen je Zeiteinheit. Anders ausgedrückt, die Förderleistung steigt proportional mit dem je Hub förderbaren Volumen, und der Pumpfrequenz. Dies triff insbesondere bei dem vorstehend detailliert beschriebenen, drei "Takte" umfassenden Verfahren zum Betrieb der erfindungsgemäßen Mikropumpe zu.

Nach einer weiteren Ausführungsform werden beide Aktuatoren mittels einer Sinus-, Trapez- oder Rechteckspannung angesteuert, deren Phasenversatz 90°±20° oder 270±20° Grad beträgt, wobei der Hub des Aktuators auf 75%±20% begrenzt ist. Versuche haben überraschend ergeben, dass auch bei einer wie vorstehend genannten Begrenzung des Hubes des bzw. der Aktuatoren eine gute Förderleistung erreichbar ist.

Nach einer bevorzugten Ausführungsform wird die Mikropumpe mit einer Frequenz betrieben, welche der (dann besonders bevorzugt gleichen) Resonanzfrequenz der Aktuatoren entspricht, da dann der Hub derselben mit geringem Energieverbrauch sehr groß ist. Auch der Betrieb bei der zweiten, dritten oder höheren Oberschwingung ist möglich. Dabei ist lediglich zu beachten, dass die Eingänge in ausreichendem Maße verschlossen werden können.

Durch Verwendung steiferer oder kleinerer Scheiben kann die Resonanzfrequenz erhöht werden. Der Betrieb bei Resonanzfrequenz ist vorteilhaft, da dabei die zum Betrieb benötigte Spannung geringer ist als bei einem Betrieb außerhalb der Resonanzfrequenz. Nach einer Ausführungsform sind die Resonanzfrequenzen der Aktuatoren veränderbar, beispielsweise durch mechanisches Verkleinern / Vergrößern des schwingfähigen Bereichs (z.B. Durchmesserverkleinerung / -vergrößerung). Es sei hinzugefügt, dass die erfindungsgemäße Mikropumpe auch bei einer anderen als der Resonanzfrequenz betreibbar ist. Somit, und da die Pumpe vorteilhaft auch bei der Oberschwingung ersten oder höheren Grades in Bezug auf die Resonanzfrequenz betrieben werden kann, sind ohne konstruktive Änderungen unterschiedliche Betriebsfrequenzen und somit Förderraten möglich.

Nach einer weiteren Ausführungsform des Verfahrens, welche auch mit einer Pumpkammer mit Außenanschlag kombinierbar ist, bleibt im Betrieb der Mikropumpe jederzeit ein Abstand zwischen Aktuator und der ihm gegenüberliegenden Seite der Pumpkammer bestehen. Das bedeutet, dass der Aktuator (bzw. die ihm zugeordnete Membran, s.o.) die gegenüberliegende Seite nicht berührt, und demnach auch weder den Eingang der Durchgangsöffnung, noch den Zugang berührt und so abdeckt (d.h., es gibt auch keinen Innenanschlag). Wenngleich aufgrund des Nicht-Verschließens besagter Öffnungen die Förderleistung oder der erzielbare Pumpdruck reduziert wird, haben Versuche überraschend ergeben, dass die erfindungsgemäße Mikropumpe trotzdem eine nutzbare Förderleistung bei akzeptablem Pumpendruck erzielt. Der Vorteil dieser Ausführungsform liegt somit in der geringeren Anfälligkeit gegenüber Fertigungstoleranzen oder geometrieverändernden Betriebsbedingungen, denn die Mikropumpe arbeitet auch dann noch ausreichend gut, wenn ein Verschluss der vorstehend genannten Öffnungen nicht mehr gegeben ist, bzw. benötigt besagten Verschluss überhaupt nicht. Durch den Außenanschlag wird die Dosiergenauigkeit weiterhin verbessert.

Nach einer Ausführungsform wird die erfindungsgemäße Mikropumpe für gasförmiges Fluid verwendet. Insbesondere bei Gasen kommen die einleitend beschriebenen Geräuschprobleme am stärksten zum Tragen. Demnach ist die erfindungsgemäße Mikropumpe insbesondere in diesem Anwendungsfeld besonders vorteilhaft einsetzbar, da sie eine geringe Geräuschentwicklung aufweist. Die geringe Geräuschentwicklung wird aufgrund des Verzichts auf gesonderte, mechanische Ventile ermöglicht. Dies wiederum erlaubt einen Betrieb bei hohen Frequenzen im unhörbaren Ultraschallbereich. Aber auch die Verwendung von anderen als Rechteckschwingungen zur Ansteuerung der Aktuatoren, wie z.B. von Sinusschwingungen, erlaubt eine signifikante Reduktion der beim Betrieb auftretenden Lautstärke.

Nach einer anderen Ausführungsform wird die Mikropumpe für Flüssigkeiten verwendet.

Schließlich betrifft die Erfindung auch die Verwendung einer Mikropumpe nach obenstehender Definition als mehrstufiges Ventilsystem mit vier Verschlüssen. Auf die obenstehenden Erläuterungen hierzu wird verwiesen.

### Figurenbeschreibung

Nachfolgend wird die Erfindung anhand von Figuren beispielhaft erläutert. Dabei zeigt
- **Figur 1**: die erfindungsgemäße Mikropumpe einer ersten Variante in einem Ruhezustand;
- **Figur 2**: diese erfindungsgemäße Mikropumpe in einem Ausgangszustand, der zugleich das Ende des Ausgabevorgangs ist;
- **Figur 3**: diese erfindungsgemäße Mikropumpe am Ende des Ansaugvorgangs;
- **Figur 4**: diese erfindungsgemäße Mikropumpe am Ende des Verschiebevorgangs;
- **Figur 5**: die erfindungsgemäße Mikropumpe einer zweiten Variante in einem Ruhezustand, der zugleich das Ende des Ausgabevorgangs ist;
- **Figur 6**: diese erfindungsgemäße Mikropumpe am Ende des Ansaugvorgangs;
- **Figur 7**: diese erfindungsgemäße Mikropumpe am Ende des Verschiebevorgangs;
- **Figur 8**: diese erfindungsgemäße Mikropumpe in einem "normally-open-Zustand";
- **Figur 9**: die erfindungsgemäße Mikropumpe einer dritten Variante in einem Ruhezustand, der zugleich das Ende des Ausgabevorgangs ist;
- **Figur 10**: diese erfindungsgemäße Mikropumpe am Ende des Ansaugvorgangs;
- **Figur 11**: diese erfindungsgemäße Mikropumpe am Ende des Verschiebevorgangs;
- **Figur 12**: diese erfindungsgemäße Mikropumpe in einem "normally-open-Zustand";
- **Figur 13**: eine Ausführungsform der Mikropumpe mit zwei Pumpkammern, wobei nur eine Pumpkammer einen äußeren Anschlag aufweist;
- **Figur 14**: eine Ausführungsform dieser Mikropumpe mit Verstelleinrichtung;
- **Figur 15**: beispielhaft die Veränderung der Flussrate und Förderrichtung bei Veränderung des Phasenversatzes beider Aktuatoren.

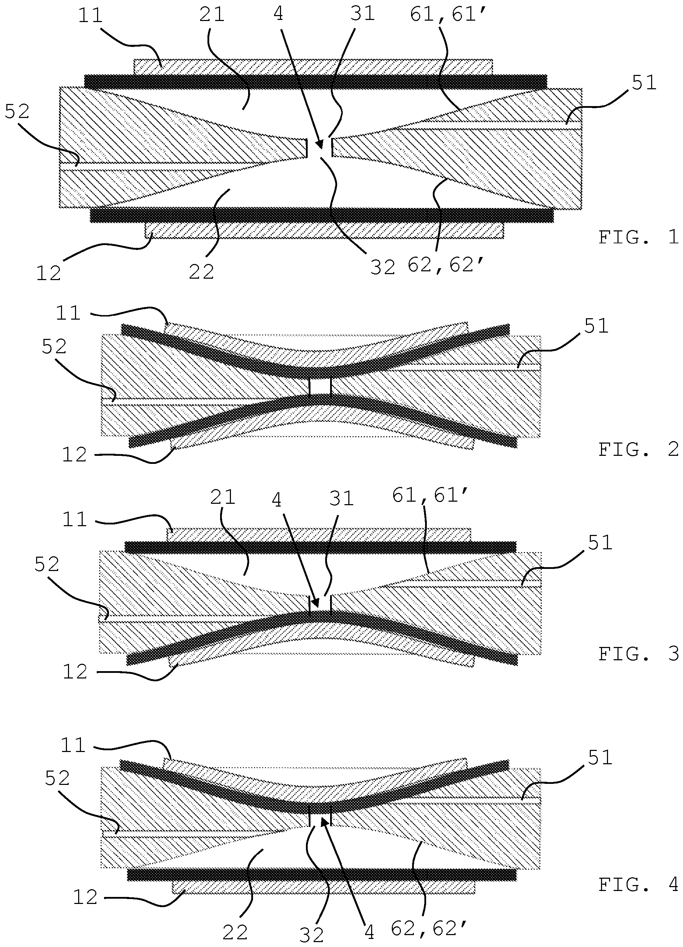

In der **Figur 1** ist die erfindungsgemäße Mikropumpe in einem Ruhezustand dargestellt. Es handelt sich hierbei um eine "normally-open-Variante" der erfindungsgemäßen Mikropumpe, bei welcher im Grundzustand die Aktuatoren die Eingänge nicht verschließen, so dass Fluid durch die Pumpe strömen kann.

Die Mikropumpe ist vorliegend symmetrisch aufgebaut, und demnach für eine Förderung in beide Richtungen geeignet. Sie weist zwei Pumpkammern 11, 12 auf. Sie umfasst ferner zwei innere Anschläge 61', 62'; hierfür dienen die Innenseiten 61, 62 der beiden Pumpkammern 11, 12.

Für das Verständnis der Erfindung unwesentliche Teile wie elektrische Zuleitungen, Dichtungen und dergleichen sind aus Gründen der Übersichtlichkeit weggelassen.

Der gezeigte Ruhezustand ist dadurch gekennzeichnet, dass sich beide Aktuatoren 11, 12 in einer Ruheposition befinden. Im Ausführungsbeispiel sind die Aktuatoren 11, 12 als Piezoscheiben ausgestaltet, die auf einer Membran aufgebracht sind (schwarze Fläche). Definitionsgemäß ergeben beide Komponenten jeweils einen Aktuator 11, 12.

Jeder Aktuator 11, 12 deckt eine Pumpkammer 21, 22 ab, begrenzt und definiert also ihr Volumen. Verändert sich die Auslenkung eines Aktuators 11, 12, d.h. vergrößert sich der Abstand des Aktuators 11, 12 zur jeweiligen Seite 61, 62, so ändert dies das Volumen der jeweiligen Pumpkammer 21, 22, wie weiter unten gezeigt wird. Im Zentrum jeder Pumpkammer 21, 22, und zwar an der dem jeweiligen Aktuator 11, 12 gegenüberliegenden, vorliegend als (Innen)Anschlag 61', 62' dienenden Seite 61, 62, ist ein Eingang 31, 32 zur Durchgangsöffnung 4 angeordnet. Die Durchgangsöffnung 4 verbindet beide Pumpkammern 21, 22 fluidisch miteinander.

Ferner ist in jeder Pumpkammer 21, 22 noch jeweils ein Zugang 51, 52 vorhanden, der sie mit der Umgebung verbindet, und an dessen distalen Ende beispielsweise eine Schlauchbefestigung oder dergleichen angebracht sein kann (nicht gezeigt).

In der **Figur 2** sind beide Aktuatoren 11, 12 in einer ausgelenkten Position gezeigt. Vorliegend wird dieser Zustand als "Ausgangszustand" bezeichnet, der am Anfang eines jeden Pumpzyklus' dieser Variante der Mikropumpe steht.

Wie nunmehr ersichtlich, entspricht die Form derjenigen Seite 61, 62, die dem jeweiligen Aktuator 11, 12 gegenüberliegt ("Boden" der Pumpkammer), jeweils dem Negativ der Form des ausgelenkten Aktuators 11, 12. Auf diese Weise wird nahezu die gesamte Menge an Fluid (nicht gezeigt) aus den beiden Pumpkammern 21, 22 gepresst, und das Totvolumen minimiert.

Die beiden Seiten 61, 62 dienen vorliegend auch als Innenanschläge 61', 62'; durch mechanischen Kontakt des Aktuators 11, 12 mit der entsprechenden Seite 61, 62 sind die Endpositionen der Aktuatoren 11, 12 mechanisch festgelegt und insofern von ihnen unabhängig, als dass lediglich sicherzustellen ist, dass jeder Aktuator 11, 12 in der gezeigten Minimalposition tatsächlich am jeweiligen Anschlag 61', 62' (Seite 61, 62) anliegt.

Die beiden Eingänge 31, 32 (Bezugszeichen weggelassen) werden im Ausgangszustand von den Aktuatoren 11, 12 verschlossen. Auch die beiden Zugänge 51, 52 werden von ihnen verschlossen.

Die beiden Aktuatoren 11, 12 werden vorliegend durch den entsprechenden Innenanschlag 61', 62' (Seiten 61, 62) an einer weiteren Bewegung (Wölbung in Richtung des Zentrums der Mikropumpe) gehindert.

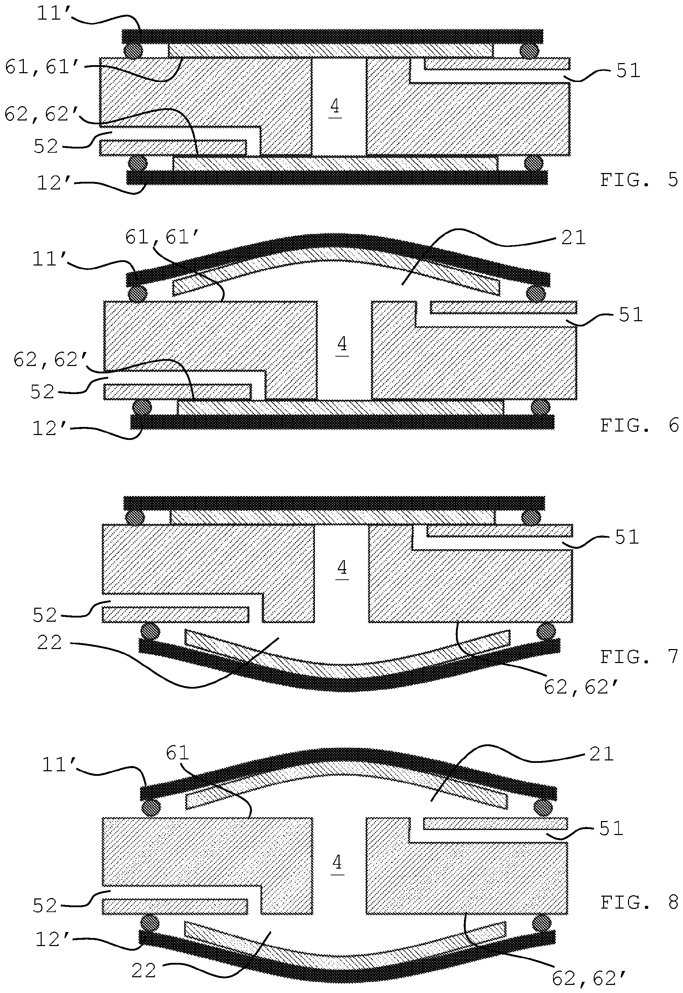

In der **Figur 3** ist der Zustand gezeigt, wie er sich am Ende des Ansaugvorgangs darstellt. In diesem Zustand hat sich der erste Aktuator 11 entspannt, ist also aus der ausgelenkten Position in seine (vorliegend ebene) Ruheposition gegangen. Aktuator 12 verbleibt weiterhin in der ausgelenkten Position, vorliegend in körperlichem Kontakt zu seinem Anschlag 62'. Durch das Vergrößern des Volumens der ersten Pumpkammer 21 entsteht in dieser ein Unterdruck. Dieser führt dazu, dass Fluid durch den Zugang 51 in die Pumpkammer 21 strömt. Es ist klar, dass der Aktuator 11 auch weiter nach Außen schwingen könnte, um so das Volumen der Pumpkammer 21 weiter zu vergrößern (nicht gezeigt). Allerdings wäre dann vorzugsweise ein weiterer, außenliegender Anschlag vorhanden (s. Fig. 5 - 8).

Die **Figur 4** stellt den Zustand am Ende des Verschiebens des Fluids von der ersten Pumpkammer 21 in die zweite Pumpkammer 22 dar. Durch einsetzendes Bewegen des zweiten Aktuators 12 aus seiner minimal ausgelenkten Anschlagsstellung (s. Fig. 3, "minimal" bedeutet immer "dem Anschlag am nächsten") heraus in Richtung seiner Ruhestellung wird zunächst der zweite Eingang 32 freigegeben; durch sukzessives Weiterbewegen des Aktuators 12 wird die zweite Pumpkammer 22 allmählich vergrößert. Durch gleichzeitiges, sukzessives Auslenken des ersten Aktuators 11 aus der Ruhe- in seine minimal ausgelenkte Position wird das Fluid nun durch die beidseitig offene Durchgangsöffnung 4 geschoben, bis die erste Pumpkammer 21 geleert und ihr Volumen minimiert ist. In dieser Position verschließt der erste Aktuator 11 den Eingang 31 wieder.

Schließlich (nicht in Fig. 4 gezeigt) bewegt sich auch der zweite Aktuator 12 wieder in seine minimal ausgelenkte Position, vorliegend bis zum entsprechenden Anschlag 62' (Seite 62). Da der erste Aktuator 11 bereits die Durchgangsöffnung 4 verschlossen hat, kann das Fluid nunmehr lediglich durch den Zugang 52 entweichen; die Mikropumpe gibt das Fluid aus. Ein Pumpzyklus ist vollständig, die beiden Aktuatoren 11, 12 befinden sich wieder in der in **Figur 2** gezeigten Ausgangsposition, die Mikropumpe befindet sich wieder im definitionsgemäßen Ausgangszustand.

Somit umfasst ein Förderzyklus 3 "Takte", wie in den Figuren 2 bis 4 dargestellt.

Die **Figuren 5 bis 8** zeigen eine "normally-closed"-Variante der erfindungsgemäßen Mikropumpe.

Die **Figur 5** stellt die Mikropumpe in einem Ruhezustand dar. In diesem Zustand liegen beide Aktuatoren 11', 12' an den jeweiligen Seiten 61, 62 an. Die Pumpkammern 21, 22 (Bezugszeichen s. Fig. 6 und 7) haben ein minimales Volumen. Die Seiten 61, 62 dienen vorliegend zugleich als innere Anschläge 61', 62'.

Am Ende des Ansaugvorgangs, der in **Figur 6** gezeigt ist, hat sich der erste Aktuator 11' maximal von der ihm gegenüberliegenden Seite 61 und somit Anschlag 61' entfernt. Das Volumen der ersten Pumpkammer 21 ist maximal. Das Fluid ist durch den Zugang 51 eingeströmt. Da der zweite Aktuator 12' noch flach an der Seite 62 und somit Anschlag 62' anliegt, ist der Durchgang 4 dort verschlossen; Fluid kann demnach nicht vom Zugang 52 zurückfließen.

In der **Figur 7** ist die erfindungsgemäße Mikropumpe am Ende des Verschiebevorgangs dargestellt. Analog zum Verschiebevorgang der weiter oben beschriebenen "normally-open"-Variante wurde auch hier das Fluid von der ersten Pumpkammer 21 in die zweite Pumpkammer 22 verschoben. Dazu wird der Abstand des ersten Aktuators 11' zur Seite 61 bzw. Anschlag 61' sukzessive verringert, während der Abstand des zweiten Aktuators 12' sukzessive vergrößert wird, bis sich der in Fig. 7 gezeigte Zustand ergibt.

Nachfolgend nimmt auch der zweite Aktuator 12' wieder seine Ruheposition ein, so dass sich der in Fig. 5 gezeigte Ausgangszustand ergibt. Währenddessen wird das Volumen der zweiten Pumpkammer 22 verringert, so dass das Fluid nur noch den Weg durch den Zugang 52 aus der Mikropumpe heraus nehmen kann.

Somit umfasst auch der Förderzyklus dieser Ausführungsform 3 "Takte", wie in den Figuren 5 bis 7 dargestellt.

Die **Figur 8** stellt der Vollständigkeit halber die Stellungen der beiden Aktuatoren 11', 12' der zweiten Variante dar, wenn sich diese in einem "normally-open"-Zustand befindet. Es ist jedoch klar, dass im Grundzustand typischerweise ebene Aktuatoren nur durch Energiezufuhr besagte Position einnehmen können. Somit ist, wenn ein derartiger Zustand als Grundzustand gewünscht ist, die weiter oben beschriebene "normally-open"-Variante vorteilhafter.

Die Frequenz der Mikropumpe bzw. der Ansteuerung der Aktuatoren 11, 12, beträgt z.B. 25 kHz, wobei die Aktuatoren dann typischerweise in einer Oberschwingung ersten Grades betrieben werden. Der Durchmesser des vorzugsweise scheibenförmigen Aktuators beträgt beispielsweise 12 mm.

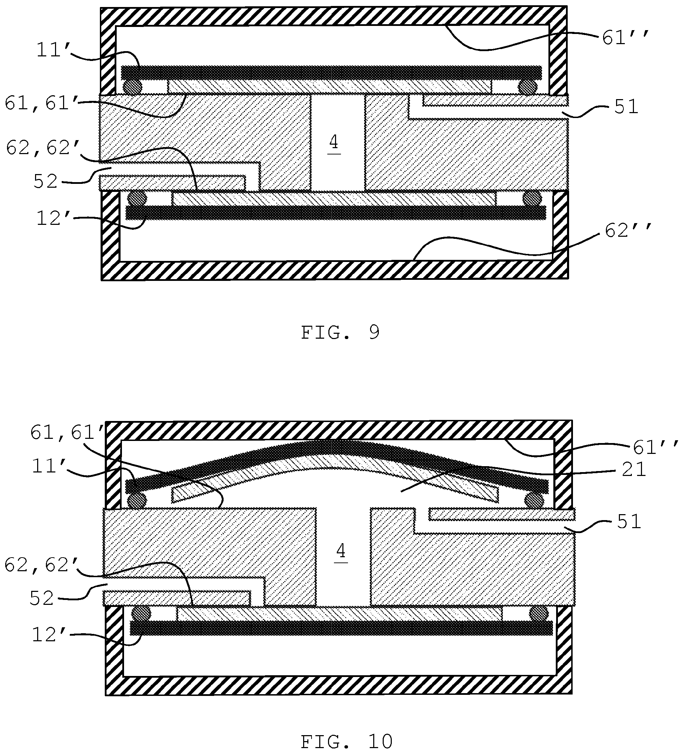

Die **Figuren 9 bis 12** zeigen eine weitere Ausführungsform einer "normally-closed"-Variante der erfindungsgemäßen Mikropumpe. Diese weist an den nach außen weisenden Seiten der Aktuatoren 11', 12' einen schematisch gezeigten mechanischen äußeren Anschlag 61', 62' auf. Dieser verhindert eine freie (Weiter-)Bewegung des jeweiligen Aktuators 11', 12', so dass dessen maximale (also dem jeweiligen Anschlag fernste) Auslenkung mechanisch vorgegeben ist. Die Seiten 61, 62 dienen als innere Anschläge 61', 62'.

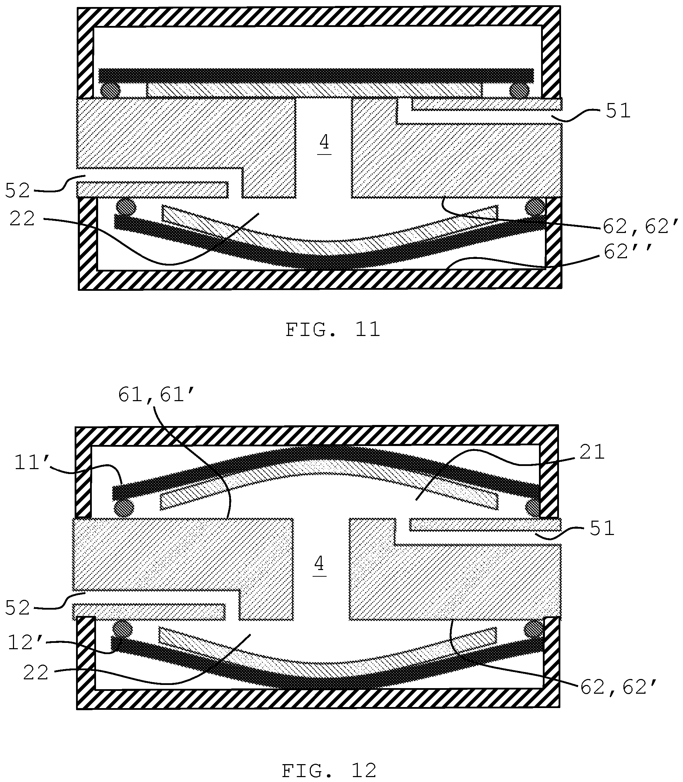

Die **Figur 9** stellt die Mikropumpe in einem Ruhezustand dar. In diesem Zustand liegen beide Aktuatoren 11', 12' an den jeweiligen Seiten 61, 62 an, nicht hingegen am jeweiligen außenliegenden Anschlag 61'', 62''. Die Pumpkammern 21, 22 (Bezugszeichen s. Fig. 10 und 11) haben ein minimales Volumen.

Am Ende des Ansaugvorgangs, der in **Figur 10** gezeigt ist, hat sich der erste Aktuator 11' maximal von der ihm gegenüberliegenden Seite 61 entfernt, und liegt am äußeren Anschlag 61'' an. Das Volumen der ersten Pumpkammer 21 ist maximal, und wird dabei durch den äußeren Anschlag 61'', der dem Aktuator 11' seine Endposition vorgibt, definiert. Das Fluid ist durch den Zugang 51 eingeströmt. Da der zweite Aktuator 12' noch flach an der Seite 62 und somit am inneren Anschlag 62' anliegt, ist der Durchgang 4 dort verschlossen; Fluid kann demnach nicht vom Zugang 52 zurückfließen.

In der **Figur 11** ist die erfindungsgemäße Mikropumpe am Ende des Verschiebevorgangs dargestellt. Analog zum Verschiebevorgang der weiter oben beschriebenen "normally-open"-Variante wurde auch hier das Fluid von der ersten Pumpkammer 21 in die zweite Pumpkammer 22 verschoben. Dazu wird der Abstand des ersten Aktuators 11' zur Seite 61 sukzessive verringert, während der Abstand des zweiten Aktuators 12' sukzessive vergrößert wird, bis sich der in Fig. 11 gezeigte Zustand ergibt, in welchem die Endposition des zweiten Aktuators 12' durch den entsprechenden äußeren Anschlag 62'' vorgegeben wird.

Nachfolgend (nicht dargestellt) nimmt auch der zweite Aktuator 12' wieder seine Ruheposition ein, so dass sich wieder der in Fig. 9 gezeigte Ausgangszustand ergibt. Währenddessen wird das Volumen der zweiten Pumpkammer 22 verringert, so dass das Fluid nur noch den Weg durch den Zugang 52 aus der Mikropumpe heraus nehmen kann.

Somit umfasst auch der Förderzyklus dieser Ausführungsform 3 "Takte", wie in den Figuren 9 bis 11 dargestellt.

Die **Figur 12** stellt der Vollständigkeit halber die Stellungen der beiden Aktuatoren 11', 12' dieser Ausführungsform dar, wenn sich diese in einem "normally-open"-Zustand befindet. Es ist jedoch klar, dass im Grundzustand typischerweise ebene Aktuatoren nur durch Energiezufuhr besagte Position einnehmen können. Somit ist, wenn ein derartiger Zustand als Grundzustand gewünscht ist, die weiter oben beschriebene "normally-open"-Variante mit "echten" Pumpkammern vorteilhafter.

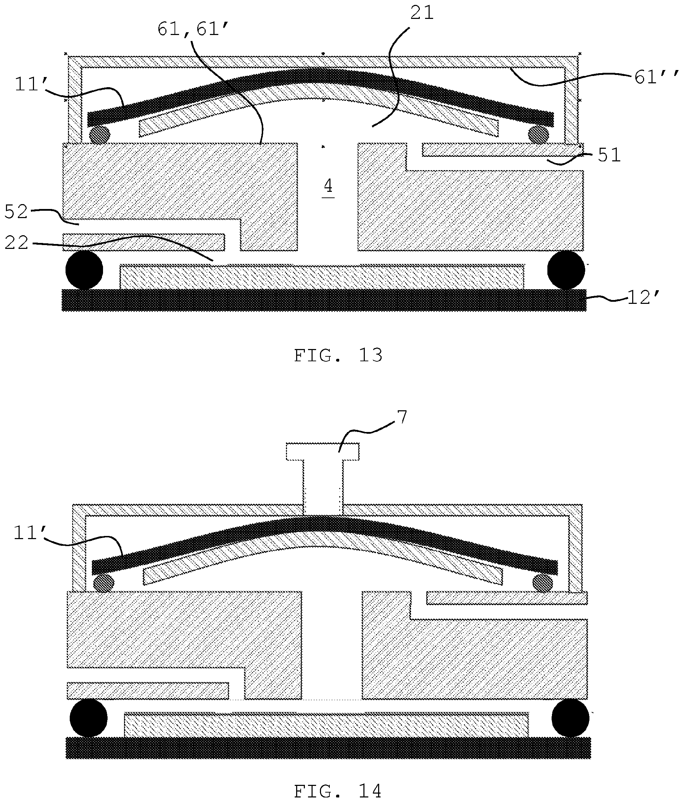

**Figur 13** zeigt eine Ausführungsform der Mikropumpe mit zwei Pumpkammern 21, 22, wobei nur eine Pumpkammer 21 einen inneren Anschlag 61', sowie einen äußeren Anschlag 61'' aufweist. Die im Bild oben liegende Pumpkammer 21 weist einen Aktuator 11' auf, der in der gezeigten maximalen Auslenkung am äußeren Anschlag 61'' anliegt. Der Aktuator 12' hingegen weist keinen derartigen Innen- oder Außenanschlag auf. Da bei Betrieb des Aktuators 11' das von ihm geförderte Volumen mittels des äußeren Anschlags 61'' sowie des inneren Anschlags 61' definiert ist, kann auch nur dieses Volumen vom nachfolgend (stromabwärts) angeordneten Aktuator 12' weitergefördert werden. Es muss lediglich sichergestellt sein, dass besagter zweiter Aktuator 12' sowie die zugehörige Pumpkammer 22 dazu geeignet und eingerichtet sind, auch tatsächlich ein Volumen dieser Größe zu fördern. Vorzugsweise kann der Aktuator auch ein zumindest geringfügig (z.B. +5%, +10%, +20%) größeres Volumen fördern. Die Förderrichtung erfolgt vorliegend von der Pumpkammer 21 in die Pumpkammer 22. Angedeutet ist in der Fig. 13, dass der Aktuator 12' größer und dicker als der Aktuator 11' ist, so dass mit ihm auch ein größeres Volumen förderbar ist. Er weist auch keinen Anschlag auf, denn in der gezeigten Ruhelage ist seine im Bild nach oben weisende, der Pumpkammer 22 zugewandte Seite, von der dieser Seite gegenüberliegenden Seite der Pumpkammer 22 beabstandet. Beide Seiten liegen also nicht aneinander an; auch bei einem Auslenken des Aktuators 12' wird sich dieser nicht flächig an die Seite der Pumpkammer 22 anlegen. Auch ein außenliegender Anschlag für den Aktuator 12' ist nicht vorhanden.

Die Ausführungsform nach **Figur 14****,** in welcher die Bezugszeichen weitgehend fortgelassen sind, weist zur nachträglichen, einfachen Justage der Position maximaler Auslenkung des Aktuators 11' eine schematisch gezeigte Verstelleinrichtung 7 auf. Diese ist in Richtung des Aktuators 11' verstellbar, wodurch die Endposition desselben in gewissen Grenzen variiert werden kann.

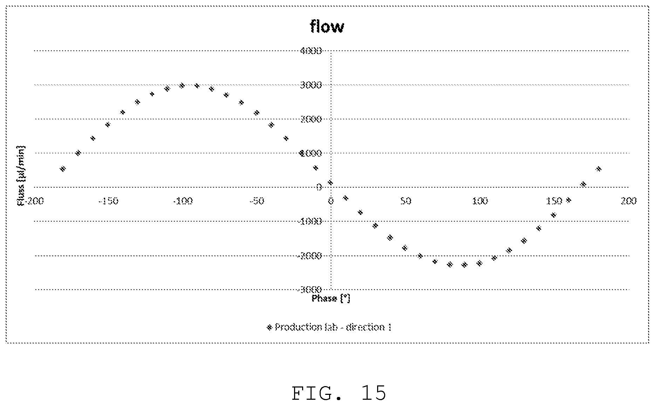

**Figur 15** zeigt beispielhaft die Veränderung der Flussrate und Förderrichtung bei Veränderung des Phasenversatzes (auch: Phasendifferenz) zwischen der Ansteuerung beider Aktuatoren. Beide Aktuatoren werden mit einer Sinusspannung gleicher Frequenz (hier: 300 Hz) und Amplitude (hier: 250 Vpp) angesteuert. Die Zahlen der Y-Achse sind vorliegend lediglich qualitativ zu verstehen, während die Zahlen der X-Achse konkrete Werte für die Phasenverschiebung der Spannungskurven der Steuerspannungen beider Aktuatoren darstellen. Aus dem Diagramm ist ersichtlich, dass bei einem Phasenversatz von 0° oder ±180° die Förderrate zu Null wird. Im ersten Fall schwingen beide Aktuatoren im Gleichtakt, im zweiten Fall im Gegentakt.

Bei einem Phasenversatz von +90° erreicht die Förderrate ein negatives Maximum. In diesem Fall eilt der Aktuator 11, 11' dem Aktuator 12, 12' voraus; die Förderrichtung ist dann vom Zugang 51 zum Zugang 52. Bei einem Phasenversatz von -90° erreicht die Förderrate ein positives Maximum. In diesem Fall eilt der Aktuator 11, 11' dem Aktuator 12, 12' nach; die Förderrichtung ist dann vom Zugang 52 zum Zugang 51; mithin ist die Förderrichtung gerade umgekehrt.

Ersichtlich ist auch, dass durch Variieren des Phasenversatzes um den Wert von ±90° herum eine reduzierte Förderrate auftritt.

Je nach Bauform kann das positive oder negative Maximum jedoch auch bei anderen Werten, beispielsweise bei ±70°, ±80°, ±100°, oder ±110° liegen. Dies kann dann der Fall sein, wenn die beiden Pumpkammern nicht vollständig identisch, sondern leicht "asymmetrisch" aufgebaut sind. Dies kann beispielsweise aufgrund unterschiedlicher Volumina der Pumpkammern, voneinander differierender Aktuatoren, unterschiedlichen Strömungswiderständen der jeweiligen Zugänge, etc. der Fall sein. Derartige Unterschiede können beabsichtigt sein; typischerweise resultieren sie jedoch aus der fertigungsbedingten Variation der entsprechenden Komponenten. Die Erfindung erlaubt es jedoch, das nachteilige Ergebnis solcherart unerwünschter, aber unvermeidbarer Variationen mittels Anpassung der Phasenverschiebung auszugleichen. Anstelle kostenintensiver Maßnahmen zur weiteren Verbesserung beispielsweise der Gleichheit der Aktuatoren, der Fügetechnik, oder des Herstellprozesses kann eine Optimierung der Förderrate durch einfache Anpassung über die Ansteuerung der Aktuatoren erfolgen. Zudem lassen sich so auch nachträglich auftretende Variationen, beispielsweise aufgrund unterschiedlicher Alterung, oder Variationen, die sich bei unterschiedlichen Betriebsbedingungen (Druck, Temperatur, Viskosität des Fördermediums, ...) ergeben, in situ nachregulieren, was andernfalls nicht möglich wäre.

### Bezugszeichenliste

- 11,12,11',12': Aktuator
- 21,22: Pumpkammer
- 31,32: Eingang
- 4: Durchgangsöffnung
- 51,52: Zugang
- 61,62: Seite
- 61',62': Anschlag, innerer Anschlag
- 61" ,62": Anschlag, äußerer Anschlag
- 7: Verstelleinrichtung

## Patentansprüche

1. Mikropumpe mit geringer Gehäusegröße, umfassend eine Pumpkammer (21), welche sowohl mittels einer Durchgangsöffnung (4) als auch einem Zugang (51) fluidisch befüllbar oder entleerbar ist, wobei die Pumpkammer (21) mit einem scheibenförmigen Aktuator (11; 11') abgedeckt ist, so dass das Volumen der Pumpkammer (21) mittels Auslenkens des Aktuators (11; 11') änderbar ist, wobei die Durchgangsöffnung (4) in einer dem Aktuator (11; 11') gegenüberliegenden Seite (61) der Pumpkammer (21) angeordnet ist, und der Zugang (51) einen im Vergleich zur Durchgangsöffnung (4) größeren oder ähnlichen Strömungswiderstand aufweist, und wobei ein Eingang (31) zur Durchgangsöffnung (4)
- mittels des ausgelenkten Aktuators (11) verschließbar ist, so dass ein im Grundzustand geöffnetes Ventil gebildet ist, oder
- mittels des unausgelenkten Aktuators (11') verschlossen ist, so dass ein im Grundzustand geschossenes Ventil gebildet ist,
**dadurch gekennzeichnet, dass** die Mikropumpe eine zweite Pumpkammer (22) mit Aktuator (12; 12') und Zugang (52) aufweist, deren ebenfalls einen Eingang (32) umfassende Durchgangsöffnung (4) mit derjenigen der ersten Pumpkammer (21) verbunden ist, wobei
- der unausgelenkte Aktuator (11'; 12') an der ihm gegenüberliegenden Seite (61, 62) der Pumpkammer (21, 22) anliegt, so dass sich eine Pumpkammer (21, 22) mit einem Volumen von Null ergibt, oder
- wobei der unausgelenkte Aktuator (11, 12) von der ihm gegenüberliegenden Seite (61, 62) der Pumpkammer (21, 22) beabstandet ist, so dass sich eine Pumpkammer (21, 22) mit einem Volumen größer Null ergibt, und wobei ein Anschlag (61', 62') durch die Seite (61, 62) gebildet ist, gegen welche der Aktuator (11, 12) mittels Ansteuerns mechanisch anlegbar ist, so dass das Volumen der Pumpkammer (21, 22) definiert minimierbar ist,
wobei der Anschlag (61'', 62''), gegen welchen der Aktuator (11', 12') mittels Ansteuerns mechanisch anlegbar ist, sich auf derjenigen Seite des Aktuators (11', 12') befindet, welche der Pumpkammer (21, 22) abgewandt ist, so dass das Volumen der Pumpkammer (21, 22) definiert maximierbar ist.

2. Mikropumpe nach Anspruch 1, wobei die zweite Pumpkammer (12, 12') identisch der ersten Pumpkammer (11, 11') ausgebildet ist.

3. Mikropumpe nach Anspruch 1 oder 2, wobei der Eingang (31, 32) der Durchgangsöffnung (4)
- mittels des ausgelenkten Aktuators (11, 12) verschließbar ist, so dass ein im Grundzustand geöffnetes Ventil gebildet ist, wobei der Aktuator (11, 12) in einer Ruhelage von der gegenüberliegenden Seite (61; 62) der jeweiligen Pumpkammer (21, 22) beabstandet ist, oder
- mittels des unausgelenkten Aktuators (11', 12') verschlossen ist, so dass ein im Grundzustand geschossenes Ventil gebildet ist, wobei der Aktuator (11', 12') in einer Ruhelage an der gegenüberliegenden Seite (61, 62) der jeweiligen Pumpkammer (21, 22) anliegt,
**dadurch gekennzeichnet, dass** dem Aktuator (11, 12; 11', 12') ein Anschlag (61', 62') zugeordnet ist, welcher den Hub des Aktuators (11, 12; 11', 12') mechanisch begrenzt.

4. Mikropumpe nach einem der Ansprüche 1 bis 3, wobei deren Aktuatoren (11, 12, 11', 12') jeweils
- mittels einer Rechteckwelle, einer Sinuswelle oder einer Trapezwelle ansteuerbar sind, wobei
- zwischen den beiden Wellen ein Phasenversatz ungleich 180° herstellbar ist.

5. Mikropumpe nach einem der vorhergehenden Ansprüche,
- wobei die beiden Pumpkammern (21, 22) (i) gegenüberliegend oder (ii) nebeneinander positioniert, und jeweils mittels der gemeinsamen Durchgangsöffnung (4) fluidisch verbunden sind, und/oder
- wobei die Durchgangsöffnung (4) im Zentrum der dem Aktuator (11, 12; 11', 12') gegenüberliegenden Seite (61, 62) der jeweiligen Pumpkammer (21, 22) angeordnet ist.

6. Mikropumpe nach einem der vorhergehenden Ansprüche, dieselbe sowohl umfassend eine Pumpkammer (21, 22) mit einem Innenanschlag (61', 62'), der durch die Seite (61, 62) gebildet ist, gegen welche der Aktuator (11, 12) mittels Ansteuerns mechanisch anlegbar ist, so dass das Volumen der Pumpkammer (21, 22) definiert minimierbar ist, als auch einen Außenanschlag (61'', 62''), gegen welchen der Aktuator (11', 12') mittels Ansteuerns mechanisch anlegbar ist, und welcher sich auf derjenigen Seite des Aktuators (11', 12') befindet, welche der Pumpkammer (21, 22) abgewandt ist, so dass das Volumen der Pumpkammer (21, 22) definiert maximierbar ist .

7. Mikropumpe nach Anspruch 1, wobei dieselbe
- (i) nur eine Pumpkammer (21) umfasst, deren unausgelenkter Aktuator (11, 12) von der ihm gegenüberliegenden Seite (61, 62) der Pumpkammer (21, 22) beabstandet ist, so dass sich eine Pumpkammer (21, 22) mit einem Volumen größer Null ergibt, wobei ein Innenanschlag (61', 62') durch die Seite (61, 62) gebildet ist, gegen welche der Aktuator (11, 12) mittels Ansteuerns mechanisch anlegbar ist, so dass das Volumen der Pumpkammer (21, 22) definiert minimierbar ist, oder
- (ii) nur eine Pumpkammer (21) umfasst, deren unausgelenkter Aktuator (11'; 12') an der ihm gegenüberliegenden Seite (61, 62) der Pumpkammer (21, 22) anliegt, so dass sich eine Pumpkammer (21, 22) mit einem Volumen von Null ergibt, wobei der Außenanschlag (61'', 62''), gegen welchen der Aktuator (11', 12') mittels Ansteuerns mechanisch anlegbar ist, sich auf derjenigen Seite des Aktuators (11', 12') befindet, welche der Pumpkammer (21, 22) abgewandt ist, so dass das Volumen der Pumpkammer (21, 22) definiert maximierbar ist, oder
- (iii) eine Pumpkammer (21) umfasst, deren unausgelenkter Aktuator (11, 12) von der ihm gegenüberliegenden Seite (61, 62) der Pumpkammer (21, 22) beabstandet ist, so dass sich eine Pumpkammer (21, 22) mit einem Volumen größer Null ergibt, mit dem Außenanschlag (61''), gegen welchen der Aktuator (11', 12') mittels Ansteuerns mechanisch anlegbar ist, sich auf derjenigen Seite des Aktuators (11', 12') befindet, welche der Pumpkammer (21, 22) abgewandt ist, so dass das Volumen der Pumpkammer (21, 22) definiert maximierbar ist,
wobei deren nutzbares Volumen kleiner oder gleich dem nutzbaren Volumen der zweiten Pumpkammer (22) ist,
oder
wobei dieselbe zwei Pumpkammern (21, 22) gemäß Definition (i), oder zwei Pumpkammern (21, 22) gemäß Definition (ii), oder zwei Pumpkammern (21, 22) gemäß Definition in Anspruch 6 umfasst.

8. Mikropumpe nach einem der vorhergehenden Ansprüche, wobei der Zugang (51, 52) ebenfalls in der dem Aktuator (11, 12; 11', 12') gegenüberliegenden Seite (61, 62) angeordnet ist.

9. Mikropumpe nach dem Oberbegriff von Anspruch 1, wobei dieselbe mindestens an einem der Aktuatoren (11, 12; 11', 12') einen Sensor zur Detektion des Anschlagens seiner zur Pumpkammer (21, 22) weisenden Seite aufweist.

10. Ventilsystem zum Steuern eines Fluidflusses, umfassend die Komponenten einer Mikropumpe gemäß einem der vorhergehenden Ansprüche, wobei das Ventilsystem vier Stufen umfasst, welche durch den Zugang (51) und den ersten Aktuator (11; 11'), den ersten Aktuator (11; 11') und die Durchgangsöffnung (4), die Durchgangsöffnung (4) und den zweiten Aktuator (12; 12'), sowie den zweiten Aktuator (12; 12') und den Zugang (52) gebildet sind.

11. Verfahren zum Betrieb einer Mikropumpe gemäß Definition des Oberbegriffs von Anspruch 1, **dadurch gekennzeichnet, dass,** ausgehend von einem Anfangszustand, in dem beide Aktuatoren (11, 12; 11', 12') derart angesteuert sind, so dass die Volumina der Pumpkammern (21, 22) minimal und die jeweiligen Eingänge (31, 32) zur Durchgangsöffnung (4) sowie die Zugänge (51, 52) verschlossen sind, ein Pumpzyklus folgende Schritte umfasst:
- Vergrößern des Abstandes des ersten Aktuators (11; 11') von der ihm gegenüberliegenden Seite (61), so dass sich das Volumen der ersten Pumpkammer (21) vergrößert und der erste Zugang (51) sowie der erste Eingang (31) zur Durchgangsöffnung (4) geöffnet werden, so dass Fluid aufgrund des so gebildeten Unterdrucks durch den ersten Zugang (51) in die erste Pumpkammer (21) strömen kann und diese befüllt;
- Gleichzeitiges Verkleinern des Abstandes des ersten Aktuators (11; 11') von der ihm gegenüberliegenden Seite (61) und Vergrößern des Abstandes des zweiten Aktuators (12; 12') von der ihm gegenüberliegenden Seite (62), so dass auch der zweite Eingang (32) zur Durchgangsöffnung (4) geöffnet ist, und das Volumen der ersten Pumpkammer (21) reduziert, und zugleich das Volumen der zweiten Pumpkammer (22) vergrößert wird, wodurch das Fluid von der ersten Pumpkammer (21) durch die gemeinsame Durchgangsöffnung (4) in die zweite Pumpkammer (22) strömen kann und erstere entleert und letztere befüllt wird;
- Verkleinern des Abstandes auch des zweiten Aktuators (12; 12'), so dass das Volumen der zweiten Pumpkammer (22) minimal wird und das Fluid aufgrund des sich bildenden Überdrucks durch den zweiten Zugang (52) ausgegeben wird, und sich die Mikropumpe wieder im Anfangszustand befindet;
so dass Fluid in den ersten Zugang (51) hinein, durch beide Pumpkammern (21, 22) hindurch, und durch den zweiten Zugang (52) hinausgefördert wird.

12. Verfahren nach Anspruch 11 zum Betrieb einer Mikropumpe mit mindestens einem Anschlag gemäß Definition in einem der Ansprüche 3, 6 oder 7, **dadurch gekennzeichnet, dass** mindestens der erste Aktuator (11; 11'), dann, wenn er sich in Richtung des jeweiligen Anschlags (61', 61'', 62', 62'') bewegt, derart angesteuert wird, dass er mit dem Anschlag (61', 61'', 62', 62'') in mechanischen Kontakt kommt, so dass sein Hub auf definierte Weise begrenzt wird.

13. Verfahren nach Anspruch 11 oder 12 zum Betrieb einer gemäß Definition in Anspruch 4 steuerbaren Mikropumpe, wobei beide Aktuatoren (11, 11', 12, 12') jeweils mit einer Rechteckwelle, einer Sinuswelle, oder einer Trapezwelle angesteuert werden, deren Phasenversatz zueinander zwischen 70° und 120° beträgt.

14. Verfahren nach einem der Ansprüche 11 bis 14, wobei die Schritte
- mittels Veränderns des Phasenversatzes oder
- mittels Umkehr der Ansteuerungsfolge
in umgekehrter Reihenfolge durchlaufen werden, so dass Fluid in den zweiten Zugang (52) hinein, durch beide Pumpkammern (22, 21) hindurch, und durch den ersten Zugang (51) hinausgefördert wird.

15. Verfahren nach einem der Ansprüche 11 bis 14, wobei beide Aktuatoren (11, 12; 11', 12')
- mittels einer Sinus-, Trapez- oder Rechteckspannung angesteuert werden, deren Phasenversatz 90°±20° oder 270±20° Grad beträgt, wobei der Hub des Aktuators (11, 12; 11', 12') auf 75%±20% begrenzt ist, und/oder
- bei Resonanzfrequenz oder einer zweiten, dritten oder höheren Oberschwingung betrieben werden.

## Claims

1. Micropump having a small housing size, comprising a pump chamber (21), which can be fluidically filled or emptied by means of a passage opening (4) as well as an inlet (51), wherein the pump chamber (21) is covered with a disk-shaped actuator (11; 11'), so that the volume of the pump chamber (21) can be changed by deflecting the actuator (11; 11'), wherein the passage opening (4) is arranged in a side (61) of the pump chamber (21) which is opposing to the actuator (11; 11'), and wherein the inlet (51) has, compared to the passage opening (4), a higher or similar flow resistance, and wherein one entrance (31), with respect to the passage opening (4),
- can be closed by means of the deflected actuator (11), so that a valve is formed which is open in a basic state, or
- can be closed by means of the undeflected actuator (11'), so that a valve is formed which is closed in a basic state,
**characterized in that** the micropump has a second pump chamber (22) with actuator (12; 12') and inlet (52), the passage opening (4) of which that also comprises an entrance (32) being connected to the one of the first pump chamber (21), wherein
- the undeflected actuator (11', 12') rests against the pump chamber's (21, 22) side opposing to the same, so that a pump chamber (21, 22) with a volume of zero is achieved, or
- the undeflected actuator (11, 12) is spaced apart from the pump chamber's (21, 22) side (61, 62) opposing to the same, so that a pump chamber (21, 22) with a volume larger than zero is achieved, and an inner end stop (61', 62') is formed by the side (61, 62) against which the actuator (11, 12) can be mechanically rested by means of control, such that the volume of the pump chamber can be minimized in a definable way,
wherein the outer end stop (61'', 62'') against which the actuator (11', 12') can be mechanically rested by way of control is located at the side of the actuator (11', 12') which is facing away from the pump chamber (21, 22), so that the volume of the pump chamber (21, 22) can be maximized in a definable way.

2. Micropump according to claim 1, wherein the second pump chamber (12, 12') is formed identical to the first pump chamber (11, 11').

3. Micropump according to claim 1 or 2, wherein the entrance (31, 32) of the passage opening (4)
- can be closed by means of the deflected actuator (11, 12), so that a valve which is open in an basic state is formed, wherein in a resting position, the actuator (11, 12) is spaced apart from the opposing side (61; 62) of the according pump chamber (21, 22), or
- is closed by means of the undeflected actuator (11`, 12'), so that a valve which is closed in an basic state is formed, wherein in a resting position, the actuator (11', 12') rests against the opposing side (61, 62) of the according pump chamber (21, 22),
**characterized in that** an end stop (61', 62`) is assigned to the actuator (11, 12; 11', 12`), which mechanically limits the stroke of the actuator (11, 12; 11', 12').

4. Micropump according to claim 1 to 3, wherein its respective actuators (11, 12, 11`, 12`)
- can be driven by means of a rectangular wave, a sinusoidal wave, or a trapezoidal wave, wherein
- a phase shift different from 180° can be effected.

5. Micropump according to any of the preceding claims,
- wherein both pump chambers (21, 22) are positioned (i) opposing one another or (ii) next to each other, and respectively fluidically connected to each other by the common passage opening (4), and/or
- wherein the passage opening (4) is arranged in the center of the according pump chamber's (21, 22) side (61, 62) which is opposing to the actuator (11, 12; 11', 12').

6. Micropump according to any of the preceding claims, the same comprising a pump chamber (21, 22) with an inner end stop (61', 62'), which is formed by the side (61, 62) against which the actuator (11, 12) can be mechanically rested by means of control, so that the volume of the pump chamber (21, 22) is minimizable in a defined way, as well as the outer end stop (61'', 62''), against which the actuator (11', 12') can be mechanically rested by means of control, and which is located at that side of the actuator (11', 12') which is facing away from the pumping chamber (21, 22), so that the volume of the pump chamber (21, 22) is maximizable in a defined way.

7. Micropump according to claim 1, wherein the same comprises
- (i) only one pump chamber (21)the undeflected actuator (11, 12) of which being spaced apart from the pump chamber's (21, 22) side (61, 62) opposing to the same, so that a pump chamber (21, 22) with a volume larger than zero is achieved, and an inner end stop (61', 62') is formed by the side (61, 62) against which the actuator (11, 12) can be mechanically rested by means of control, such that the volume of the pump chamber can be minimized in a definable way, or
- (ii) only one pump chamber (21), the undeflected actuator (11', 12') of which resting against the pump chamber's (21, 22) side opposing to the same, so that a pump chamber (21, 22) with a volume of zero is achieved, wherein the outer end stop (61'', 62'') against which the actuator (11', 12') can be mechanically rested by way of control is located at that side of the actuator (11', 12') which is facing away from the pump chamber (21, 22), so that the volume of the pump chamber (21, 22) can be maximized in a definable way, or
- (iii) one pump chamber (21), the undeflected actuator (11, 12) of which being spaced apart from the pumping chamber's (21, 22) side (61, 62) opposing the same, so that a pump chamber (21, 22) with a volume greater than zero is formed, with the outer end stop (61''), against which the actuator (11', 12') can be mechanically rested by means of control, which is located on that side of the actuator (11', 12') which is facing away from the pump chamber (21, 22), so that the volume of the pump chamber (21, 22) can be maximized in a definable way,
wherein its usable volume is smaller or equal to the usable volume of the second pump chamber (22),
or
wherein the same comprises two pump chambers (21, 22) according to definition (i), or two pump chambers (21, 22) according to definition (ii), or two pump chambers (21, 22) according to definition in claim 6.

8. Micropump according to any of the preceding claims, wherein the inlet (51, 52) as well is located in the side (61, 62) which is opposing to the actuator (11, 12; 11', 12').

9. Micropump according to the preamble of claim 1, wherein the same has at least on one of the actuators (11, 12; 11', 12') a sensor for the detection of impact of its pump chamber (21, 22) facing side.

10. Valve system for controlling a fluid flow, comprising the components according to any of the preceding claims, wherein the valve system comprises four stages which are formed by the inlet (51) and the first actuator (11; 11'), the first actuator (11; 11') and the passage opening (4), the passage opening (4) and the second actuator (12; 12'), as well as the second actuator (12; 12') and the inlet (52).

11. Method for operating a micropump according to definition the preamble of claim 1, **characterized in that,** originating from an initial state in which both actuators (11, 12; 11', 12') are controlled in such a way that the volumes of pump chambers (21, 22) are minimal and the according entrances (31, 32) to the passage opening (4) as well as the inlets (51, 52) are closed, a pumping cycle comprises the following steps:
- increasing the distance of the first actuator (11; 11') to the side (61) opposing to the same, so that the volume of the first pump chamber (21) increases and the first inlet (51) as well as the first entrance (31) to the passage opening (4) are opened, so that fluid can flow through the first entrance (51) into the first pump chamber (21) and fill the same due to the thus formed underpressure;
- simultaneously reducing the distance of the first actuator (11; 11') to the side (61) opposing the same and increasing the distance of the second actuator (12; 12') to the side (62) opposing the same, so that also the second entrance (32) to the passage opening (4) is open, and the volume of the first pump chamber (21) is reduced, and, at the same time, the volume of the second pump chamber (22) is increased, so that the fluid can flow from the first pump chamber (21) via the common passage opening (4) into the second pump chamber (22), the first being emptied and the second being filled;
- reducing the distance of also the second actuator (12; 12'), so that the volume of the second pump chamber (22) is minimized and the fluid is emitted through the second inlet (52) due to the forming overpressure, and the pump arriving again in its initial state;
so that fluid is transported into the first entrance (51), through both pump chambers (21, 22), and out of the second entrance (52).

12. Method according to claim 11 for the operation of a micropump having at least one end stop according to definition in any of claims 3, 6 or 7, **characterized in that** the first actuator (11; 11'), in a situation when it moves towards the according end stop (61', 61'', 62', 62'') is controlled such that it mechanically contacts end stop (61', 61'', 62', 62'') so that its stroke is limited in a defined way.

13. Method according to claim 11 or 12 for the operation of a controllable micropump according to definition in claim 4, wherein both actuators (11, 11', 12, 12') are accordingly controlled by a rectangular wave, a sinusoidal wave, or a trapezoidal wave, their phase shift being between 70° and 120°.

14. Method according to any of claims 11 to 14, wherein the steps
- by means of changing the phase shift or
- by means of inversing the control sequence
are run through in reverse order, so that fluid is transported into the second entrance (52), through both pump chambers (22, 21), and out of the first entrance (51).

15. Method according to any of claims 11 to 14, wherein both actuators
- (11, 12; 11', 12') are driven by means of a sinusoidal, trapezoidal, or rectangular voltage, the phase shift of which being 90°±20° or 270±20°, wherein the stroke of the actuator (11, 12; 11', 12') is limited to 75%±20%, and/or
- wherein the actuators (11, 12; 11', 12') are operated at the resonance frequency or a second, third, or higher harmonic.

## Revendications

1. Micropompe ayant une petite taille de boîtier, comprenant une chambre de pompage (21) qui peut être fluidiquement remplie ou vidée aussi bien au moyen d'un orifice de passage (4) qu'au moyen d'un accès (51), dans laquelle la chambre de pompage (21) est recouverte d'un actionneur (11 ; 11') en forme de disque, de sorte que le volume de la chambre de pompage (21) peut être changé par une déviation de l'actionneur (11; 11'), dans laquelle l'orifice de passage (4) est agencé dans un côté (61) de la chambre de pompage (21) opposé à l'actionneur (11 ; 11'), et l'accès (51) présente une résistance à l'écoulement supérieure ou similaire par rapport à l'orifice de passage (4), et dans laquelle une entrée (31), par rapport à l'orifice de passage (4)
- peut être fermée au moyen de l'actionneur (11) dévié, de sorte qu'une soupape ouverte est formée à l'état de base, ou
- est fermée au moyen de l'actionneur (11') non dévié, de sorte qu'une soupape fermée est formée à l'état de base,
**caractérisée en ce que** la micropompe comporte une seconde chambre de pompage (22) avec un actionneur (12 ; 12') et un accès (52), dont un orifice de passage (4) comprenant également une entrée (32) est relié à celui de la première chambre de pompage (21),
- dans laquelle l'actionneur (11' ; 12') non dévié est en appui contre le côté (61, 62) de la chambre de pompage (21, 22) opposé à celui-ci, de sorte qu'il en résulte une chambre de pompage (21, 22) ayant un volume égal à zéro, ou
- dans laquelle l'actionneur (11, 12) non dévié est espacé du côté (61, 62) opposé à celui-ci de la chambre de pompage (21, 22), de sorte qu'il en résulte une chambre de pompage (21, 22) ayant un volume supérieur à zéro, et dans laquelle une butée (61', 62') est formée par le côté (61, 62) contre lequel l'actionneur (11, 12) peut être mécaniquement mis en appui par pilotage, de sorte que le volume de la chambre de pompage (21, 22) peut être minimisé de manière définie,
dans laquelle la butée (61'', 62") contre laquelle l'actionneur (11', 12') peut être mécaniquement mis en appui par pilotage, se situe du côté de l'actionneur (11', 12') qui est opposé à la chambre de pompage (21, 22), de sorte que le volume de la chambre de pompage (21, 22) peut être maximisé de manière définie.

2. Micropompe selon la revendication 1, dans laquelle la seconde chambre de pompage (12, 12') est réalisée de manière identique à la première chambre de pompage (11, 11').

3. Micropompe selon la revendication 1 ou 2, dans laquelle l'entrée (31, 32) de l'orifice de passage (4)
- peut être fermée au moyen de l'actionneur (11, 12) dévié, de sorte qu'une soupape ouverte est formée à l'état de base, dans laquelle l'actionneur (11, 12) est espacé, dans une position de repos, du côté (61 ; 62) opposé de la chambre de pompage (21, 22) respective, ou
- est fermée au moyen de l'actionneur (11', 12') non dévié, de sorte qu'une soupape fermée est formée à l'état de base, dans laquelle l'actionneur (11', 12') est, dans une position de repos, en appui contre le côté opposé (61, 62) de la chambre de pompage (21, 22) respective,
**caractérisée en ce qu'**à l'actionneur (11, 12 ; 11', 12') est associtée une butée (61', 62'), qui limite mécaniquement la course de l'actionneur (11, 12 ; 11', 12').

4. Micropompe selon l'une des revendications 1 à 3, dans laquelle ses actionneurs (11, 12, 11', 12') respectifs
- peuvent être pilotés au moyen d'une onde carrée, d'une onde sinusoïdale ou d'une onde trapézoïdale,
- un déphasage différent de 180° pouvant être obtenu entre les deux ondes.

5. Micropompe selon l'une des revendications précédentes,
- dans laquelle les deux chambres de pompage (21, 22) sont positionnées (i) l'une en face de l'autre ou (ii) l'une à côté de l'autre, et sont respectivement reliées fluidiquement au moyen de l'orifice de passage (4) commun, et/ou
- dans laquelle l'orifice de passage (4) est agencé au centre du côté (61, 62) de la chambre de pompage (11, 12) respective opposé à l'actionneur (11, 11 ; 11', 12').

6. Micropompe selon l'une des revendications précédentes, celle-ci comprenant une chambre de pompage (21, 22) ayant aussi bien une butée intérieure (61', 62') qui est formée par le côté (61, 62) contre lequel l'actionneur (11, 12) peut être mécaniquement mis en appui par pilotage, de sorte que le volume de la chambre de pompage (21, 22) peut être minimisé de manière définie, qu'une butée extérieure (61'', 62'') contre laquelle l'actionneur (11', 12') peut être mécaniquement mis en appui par pilotage et qui se situe du côté de l'actionneur (11', 12') qui est opposé à la chambre de pompage (21, 22), de sorte que le volume de la chambre de pompage (21, 22) est maximisé de manière définie.

7. Micropompe selon la revendication 1, dans laquelle celle-ci
- (i) ne comprend qu'une seule chambre de pompage (21) dont l'actionneur (11, 12) non dévié est espacé du côté (61, 62) de la chambre de pompage (21, 22) opposé à celui-ci, de sorte qu'il en résulte une chambre de pompage (21, 22) ayant un volume supérieur à zéro, dans laquelle une butée intérieure (61', 62') est formée par le côté (61, 62) contre lequel l'actionneur (11, 12) peut être mécaniquement mis en appui par pilotage, de sorte que le volume de la chambre de pompage (21, 22) peut être minimisé de manière définie, ou
- (ii) ne comprend qu'une seule chambre de pompage (21) dont l'actionneur (11' ; 12') non dévié est en appui contre le côté (61, 62) de la chambre de pompage (11, 12) opposé à celui-ci, de sorte qu'il en résulte une chambre de pompage (21, 22) ayant un volume égal à zéro, dans laquelle la butée extérieure (61', 62') contre laquelle l'actionneur (11', 12') peut être mécaniquement mis en appui, se situe du côté de l'actionneur (11', 12') qui est opposé à la chambre de pompage (21, 22), de sorte que le volume de la chambre de pompage (21, 22) peut être maximisé de manière définie, ou
- (iii) comprend une chambre de pompage (21) dont l'actionneur (11, 12) non dévié est espacé du côté (61, 62) de la chambre de pompage (21, 22) opposé à celui-ci, de sorte qu'il en résulte une chambre de pompage (21, 22) ayant un volume supérieur à zéro, avec la butée extérieure (61'') contre laquelle l'actionneur (11', 12') peut être mécaniquement mis en appui, qui se situe du côté de l'actionneur (11', 12') qui est opposé à la chambre de pompage (21, 22), de sorte que le volume de la chambre de pompage (21, 22) peut être maximisé de manière définie,
dans laquelle le volume utile est inférieur ou égal au volume utile de la seconde chambre
de pompe (22),
ou
dans laquelle celle-ci comprend deux chambres de pompage (21, 22) selon la définition (i), ou deux chambres de pompage (21, 22) selon la définition (ii), ou deux chambres de pompage (21, 22) selon la définition de la revendication 6.

8. Micropompe selon l'une des revendications précédentes, dans laquelle l'accès (51, 52) est également agencé dans le côté (61, 62) opposé à l'actionneur (11, 12 ; 11', 12').

9. Micropompe selon le préambule de la revendication 1, dans laquelle celle-ci comporte un capteur au niveau au moins d'un des actionneurs (11, 12 ; 11', 12') afin de détecter l'impact de son côté dirigé vers la chambre de pompage (21, 22).

10. Système de soupape pour commander un écoulement de fluide, comprenant les composants d'une micropompe selon l'une des revendications précédentes, dans lequel le système de soupape comprend quatre étages qui sont formés par l'accès (51) et le premier actionneur (11 ; 11'), le premier actionneur (11 ; 11') et l'orifice de passage (4), l'orifice de passage (4) et le second actionneur (12 ; 12'), ainsi que le second actionneur (12 ; 12') et l'accès (52).

11. Procédé pour faire fonctionner une micropompe selon la définition du préambule de la revendication 1, **caractérisé en ce que**, en partant d'un état initial dans lequel les deux actionneurs (11, 12 ; 11', 12') sont pilotés de telle sorte que les volumes des chambres de pompage (21, 22) sont minimaux et que les entrées (31, 32) respectives de l'orifice de passage (4) sont fermées ainsi que les accès (51, 52), un cycle de pompage comprend les étapes suivantes de :
- augmenter la distance du premier actionneur (11 ; 11') jusqu'au côté (61) opposé à celui-ci, de sorte que le volume de la première chambre de pompage (21) augmente et le premier accès (51) ainsi que la première entrée (31) de l'orifice de passage (4) sont ouverts, de sorte que du fluide peut s'écouler dans la première chambre de pompage (21) par le premier accès (51) et remplit celle-ci par la dépression ainsi formée ;
- réduire simultanément la distance du premier actionneur (11 ; 11') jusqu'au côté (61) opposé à celui-ci et augmenter la distance du second actionneur (12 ; 12') jusqu'au côté (62) opposé à celui-ci, de sorte que la seconde entrée (32) de l'orifice de passage (4) est également ouverte, et le volume de la première chambre de pompage (21) est réduit et le volume de la seconde chambre de pompage (22) est augmenté en même temps, en sorte que le fluide provenant de la première chambre de pompage (21) peut s'écouler dans la seconde chambre de pompage (22) par l'orifice de passage (4) commun, la première étant vidée et la seconde remplie ;
- réduire également la distance du second actionneur (12 ; 12'), de sorte que le volume de la seconde chambre de pompage (22) devient minimal et le fluide est évacué par le second accès (52) en raison de la formation d'une surpression, et la micropompe est de nouveau à l'état initial ;
de sorte que du fluide est transporté dans le premier accès (51), à travers les deux chambres de pompage (21, 22) et à l'extérieur par le second accès (52).

12. Procédé selon la revendication 11 pour faire fonctionner une micropompe ayant au moins une butée selon la définition de l'une des revendications 3, 6 ou 7, **caractérisé en ce qu'**au moins le premier actionneur (11 ; 11'), lorsqu'il se déplace en direction de la butée (61', 61'', 62', 62'') respective, est piloté de telle sorte qu'il vient en contact mécanique avec la butée (61', 61'', 62', 62''), de sorte que sa course est limitée de manière définie.

13. Procédé selon la revendication 11 ou 12 pour faire fonctionner une micropompe pouvant être commandée selon la définition de la revendication 4, dans lequel les deux actionneurs (11, 11', 12, 12') sont respectivement pilotés avec une onde carrée, une onde sinusoïdale ou une onde trapézoïdale, dont le déphasage respectif est compris entre 70° et 120°.

14. Procédé selon l'une des revendications 11 à 14, dans lequel les étapes,
- en changeant le déphasage ou
- en inversant la séquence de commande
sont réalisées dans l'ordre inverse, de sorte que du fluide est transporté dans le second accès (52), à travers les deux chambres de pompage (22, 21) et à l'extérieur par le premier accès (51).

15. Procédé selon l'une des revendications 11 à 14, dans lequel les deux actionneurs (11, 12 ; 11', 12')
- sont pilotés par une tension sinusoïdale, trapézoïdale ou carrée dont le déphasage est de 90° ± 20° ou 270 ± 20°, dans lequel la course de l'actionneur (11, 12 ; 11', 12') est limitée à 75 % ± 20 %, et/ou
- fonctionnent à la fréquence de résonance ou à un deuxième, troisième harmonique ou un harmonique d'ordre supérieur.
